# EUROPEAN PATENT APPLICATION

(11) **EP 3 722 078 A1**
(43) Date of publication of application: **14.10.2020**
(21) Application number: 20163733.7
(22) Date of filing: 17.03.2020
(51) Int. Cl.: B29C 64/165, B29C 64/40, B33Y 70/00, B33Y 70/10

(54) **THREE-DIMENSIONAL OBJECT PRODUCING APPARATUS, THREE-DIMENSIONAL OBJECT PRODUCING METHOD, AND MATERIAL SET FOR PRODUCING THREE-DIMENSIONAL OBJECT**

(30) Priority: 20.03.2019 JP 2019053000; 20.03.2019 JP 2019053731; 13.11.2019 JP 2019205470
(71) Applicant: Ricoh Company, Ltd., Tokyo 143-8555 (JP); University of Washington, Seattle, WA 98105 (US)
(72) Inventor: SAITO, Akira, Tokyo, 143-8555 (JP); TAKIMOTO, Koji, Tokyo, 143-8555 (JP); YAMAGUCHI, Daichi, Tokyo, 143-8555 (JP); HASHIMOTO, Kenichiroh, Tokyo, 143-8555 (JP)
(74) Representative: J A Kemp LLP

(57) **Abstract**

Provided is a three-dimensional object producing apparatus (601) including: a layer forming unit (12) configured to form a particle layer (31) containing resin particles (20); a first discharging unit (5, 50, 52, 52a, 52a1, 52a2) configured to discharge a model material (10, 10m) capable of absorbing energy to the particle layer (31) to form a model region (101); a second discharging unit (5, 50, 52, 52b, 52b1, 52b2) configured to discharge a support material (10, 10s) to the particle layer (31) to form a support region (201); and an energy applying unit (80) configured to apply energy to the model region (101), wherein through application of energy to the model region (101), resin particles (20) in the model region (101) are fused with each other and resin particles (20) in the model region (101) are fused with resin particles (20) in the support region (201) contacting the model region (101).

## Description

### BACKGROUND OF THE INVENTION

### Field of the Invention

The present disclosure relates to a three-dimensional object producing apparatus, a three-dimensional object producing method, and a material set for producing a three-dimensional object.

### Description of the Related Art

Because of, for example, the capability of producing three-dimensional objects having a high strength, there has been a growing interest in apparatuses configured to form three-dimensional objects by repeating lamination of object forming layers (layered objects) formed by solidifying particle layers (powder layers) containing resin particles. As the apparatuses configured to form three-dimensional objects by repeating lamination of object forming layers formed by solidifying particle layers, for example, there have been known HSS (High Speed Sintering)-type apparatuses, SLS (Selective Laser Sintering)-type apparatuses, and BJ (Binder Jetting)-type apparatuses.

Among these types, HSS-type apparatuses are attracting a particular attention because the apparatuses are low-cost (low-priced) and three-dimensional objects can be formed in a short time.

HSS-type apparatuses are configured to form object forming layers by discharging a light-absorbing ink containing, for example, carbon black from an inkjet head to a predetermined position of a particle layer, and subsequently heating the particle layer with a light source such as a halogen lamp to solidify the predetermined position of the particle layer. HSS-type apparatuses form three-dimensional objects by laminating object forming layers by repeating the formation of object forming layers.

Regarding HSS-type apparatuses, there has been proposed a technique of discharging a detailing ink (detailing agent) to around a region intended to be an object forming layer to suppress thermal diffusion to improve removability of resin particles present around the object forming layer (for example, see International Publication No. WO 2017/162306).

Regarding BJ-type apparatuses, in order to improve flatness of a three-dimensional object, there has been known a technique of forming a sacrifice object separable from the three-dimensional object below a region in the particle layer (powder layer) intended to be the three-dimensional object via an unsolidified particle layer (for example, see Japanese Unexamined Patent Application Publication No. 2016-155367).

The present disclosure has an object to provide a three-dimensional object producing apparatus that can suppress deformation of a three-dimensional object to be formed by heating resin particles and improve the object formation accuracy of the three-dimensional object.

### SUMMARY OF THE INVENTION

According to one aspect of the present disclosure, a three-dimensional object producing apparatus includes a layer forming unit configured to form a particle layer containing resin particles, a first discharging unit configured to discharge a model material capable of absorbing energy to the particle layer to form a model region, a second discharging unit configured to discharge a support material to the particle layer to form a support region, and an energy applying unit configured to apply energy to the model region. Through application of the energy to the model region, the resin particles in the model region are fused with each other and the resin particles in the model region are fused with the resin particles in the support region contacting the model region.

The present disclosure can provide a three-dimensional object producing apparatus that can suppress deformation of a three-dimensional object to be formed by heating resin particles and improve the object formation accuracy of the three-dimensional object.

### BRIEF DESCRIPTION OF THE DRAWINGS

FIG. 1 is a schematic side view illustrating an object forming layer and regions to which a detailing ink is discharged according to an example of an existing technique;
FIG. 2 is a schematic side view illustrating an object forming layer and a sacrifice object according to another example of an existing technique;
FIG. 3 is a schematic side view illustrating an example of a model part and a support part according to a three-dimensional object producing apparatus of the present disclosure;
FIG. 4 is a schematic side view illustrating another example of a model part and a support part according to a three-dimensional object producing apparatus of the present disclosure;
FIG. 5 is a schematic side view illustrating another example of a model part and a support part according to a three-dimensional object producing apparatus of the present disclosure;
FIG. 6 is a schematic side view illustrating an example of an end portion of a model part according to an existing technique;
FIG. 7 is a schematic side view illustrating an example of an end portion of a model part according to a three-dimensional object producing apparatus of the present disclosure;
FIG. 8 is a schematic side view illustrating another example of a model part and a support part according to a three-dimensional object producing apparatus of the present disclosure;
FIG. 9 is a schematic side view illustrating another example of a model part and a support part according to a three-dimensional object producing apparatus of the present disclosure;
FIG. 10 is a schematic plan view of a three-dimensional object producing apparatus of the present disclosure according to an embodiment;
FIG. 11 is a schematic side view of a three-dimensional object producing apparatus of the present disclosure according to an embodiment;
FIG. 12 is a schematic side view illustrating an object forming section of a three-dimensional object producing apparatus of the present disclosure according to an embodiment;
FIG. 13 is a block diagram illustrating an example configuration of a controlling section of a three-dimensional object producing apparatus of the present disclosure according to an embodiment;
FIG. 14A is an exemplary view illustrating an example flow of formation of a three-dimensional object;
FIG. 14B is an exemplary view illustrating an example flow of formation of a three-dimensional object;
FIG. 14C is an exemplary view illustrating an example flow of formation of a three-dimensional object;
FIG. 14D is an exemplary view illustrating an example flow of formation of a three-dimensional object;
FIG. 14E is an exemplary view illustrating an example flow of formation of a three-dimensional object;
FIG. 14F is an exemplary view illustrating an example flow of formation of a three-dimensional object;
FIG. 15 is a view illustrating an example flow when forming a support region;
FIG. 16 is a view illustrating an example flow when forming a model region and a model part;
FIG. 17 is a view illustrating an example flow when removing a support part from a three-dimensional object;
FIG. 18 is a view illustrating an example of a support part formed using a solvent volatilizing method;
FIG. 19 is a view illustrating an example of a support part formed using a thermal curing method;
FIG. 20 is a view illustrating an example flow when fusing resin particles using a plurality of light irradiation units;
FIG. 21 is a view illustrating an example relationship between light emitted by a first light irradiation unit and light emitted by a second light irradiation unit;
FIG. 22 is a flowchart illustrating an example flow of a process of performing an object forming operation;
FIG. 23 is an image of a cross-section of an interface between a model part and a support part; and
FIG. 24 is a schematic side view illustrating an example of a model part and a support part of a three-dimensional object illustrated in FIG. 9;
FIG. 25 is a schematic side view illustrating another example of a model part and a support part according to a three-dimensional object producing apparatus of the present disclosure;
FIG. 26 is a view illustrating an example flow when forming a model region and a model part in one particle layer;
FIG. 27 is a schematic side view illustrating an example structure of a carriage of a three-dimensional object producing apparatus;
FIG. 28 is a schematic top view illustrating an example of a carriage of a three-dimensional object producing apparatus;
FIG. 29 is a schematic top view illustrating another example of a carriage of a three-dimensional object producing apparatus; and
FIG. 30 is a schematic top view illustrating another example of a carriage of a three-dimensional object producing apparatus.

### DESCRIPTION OF THE EMBODIMENTS

### (Three-dimensional object producing apparatus and three-dimensional object producing method)

A three-dimensional object producing apparatus of the present disclosure includes a layer forming unit configured to form a particle layer containing resin particles, a first discharging unit configured to discharge a model material capable of absorbing energy to the particle layer to form a model region, a second discharging unit configured to discharge a support material to the particle layer to form a support region, and an energy applying unit configured to apply energy to the model region, and further includes other units as needed.

A three-dimensional object producing method of the present disclosure includes a layer forming step of forming a particle layer containing resin particles, a model region forming step of discharging a model material capable of absorbing energy to the particle layer to form a model region, a support region forming step of discharging a support material to the particle layer to form a support region, and an energy applying step of applying energy to the model region to fuse the resin particles in the model region with each other and fuse the resin particles in the model region with the resin particles in the support region contacting the model region, and further includes other steps as needed.

The three-dimensional object producing method of the present disclosure can be suitably performed by the three-dimensional object producing apparatus of the present disclosure. The layer forming step can be suitably performed by the layer forming unit. The model region forming step can be suitably performed by the first discharging unit. The support region forming step can be suitably performed by the second discharging unit. The energy applying step can be suitably performed by the energy applying unit. The other steps can be performed by the other units.

That is, the three-dimensional object producing apparatus of the present disclosure is the same as performing the three-dimensional object producing method of the present disclosure. Hence, the details of the three-dimensional object producing method of the present disclosure will also be specified through description of the three-dimensional object producing apparatus of the present disclosure.

The three-dimensional object producing apparatus of the present disclosure is based on the following finding. When forming three-dimensional objects by heating resin particles with existing three-dimensional object producing apparatuses, there are cases where three-dimensional objects may deform and the object formation accuracy of the three-dimensional objects may be poor.

According to existing techniques, with a view to suppressing deformation such as warpage of a three-dimensional object, when newly forming (recoating) a particle layer that is heated to a predetermined preheating temperature, there is a case where the preheating temperature is controlled to a temperature (ΔT) between the recrystallizing temperature of the resin particles and the melting temperature of the resin particles. In this case, when forming an object forming layer by heating the particle layer, the resin particles in a region, to which a model material (for example, a light-absorbing ink, or a light-absorbing liquid composition) is to be discharged for the region to be the object forming layer, melt when the temperature becomes higher than or equal to the melting temperature of the resin particles. For so long as the three-dimensional object is being formed, the melted resin particles do not solidify (crystallize) because the temperature does not become lower than or equal to the crystallizing temperature. Hence, according to the existing techniques, after all object forming layers have been laminated, the object forming layers are slowly cooled to solidify the resin particles and produce the three-dimensional object.

However, according to such existing three-dimensional object producing apparatuses as described above, the three-dimensional object may have a deformed portion such as warpage due to unevenness of the temperature in the object forming layers (i.e., variation of the temperature from position to position in the object forming layers) when the object forming layers are slowly cooled.

Furthermore, the existing techniques as described above have a problem that there is a limitation on the upper limit of the particle layer preheating temperature due to some resin particles that have no clear difference between the recrystallizing temperature and the melting temperature or due to constraints imposed by heat resistance of an inkjet head, making it difficult to use resin particles having a high melting temperature. Hence, there is a problem that existing three-dimensional object producing apparatuses cannot use resin particles formed of super engineering plastics or amorphous resins.

In the invention described in International Publication No. WO 2017/162306, which is one example of existing techniques, in order to improve removability of resin particles present around an object forming layer, a detailing ink (detailing agent) is discharged to around a region intended to be the object forming layer to suppress thermal diffusion.

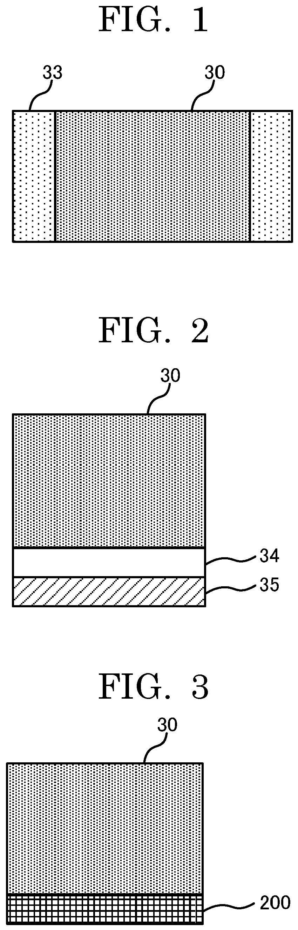

FIG. 1 is a schematic side view illustrating an object forming layer and regions to which a detailing ink is discharged according to the one example of existing techniques. The detailing ink of International Publication No. WO 2017/162306 is an aqueous liquid, and regions 33 to which the detailing ink is discharged in the particle layer do not solidify. Therefore, it is considered that the technique of International Publication No. WO 2017/162306 cannot suppress deformation of the three-dimensional object even though the detailing ink is discharged to around the object forming layer 30 as illustrated in FIG. 1.

In the invention described in Japanese Unexamined Patent Application Publication No. 2016-155367, which is another example of existing techniques, in order to improve flatness of a three-dimensional object, a sacrifice object separable from the three-dimensional object is formed below a region in the particle layer intended to be the three-dimensional object via an unsolidified particle layer.

FIG. 2 is a schematic side view illustrating an object forming layer and a sacrifice object according to the another example of existing techniques. In the invention of Japanese Unexamined Patent Application Publication No. 2016-155367, in order to suppress adhesion or aggregation of resin particles around an object forming layer 30, for example, a sacrifice object 35 is formed below a region intended to be the three-dimensional object as illustrated in FIG. 2. With respect to the three-dimensional object, the sacrifice object 35 of Japanese Unexamined Patent Application Publication No. 2016-155367 is formed at a position via an unsolidified particle layer 31 ("unsolidified" means that an object forming liquid has not been discharged). Hence, the sacrifice object 35 does not contact the object forming layer constituting the three-dimensional object. Accordingly, it is considered that the sacrifice object 35 of Japanese Unexamined Patent Application Publication No. 2016-155367 cannot suppress deformation of the three-dimensional object.

The three-dimensional object producing apparatus of the present disclosure is configured to discharge a model material capable of absorbing energy to a particle layer to form a model region and also discharge a support material to form a support region. The three-dimensional object producing apparatus of the present disclosure is configured to apply energy to the model region to fuse the resin particles in the model region with each other and fuse the resin particles in the model region with the resin particles in the support region contacting the model region.

In this way, the three-dimensional object producing apparatus of the present disclosure can fuse at least part of the model region intended to be a model part constituting the three-dimensional object with at least part of the support region intended to be a support part for maintaining the shape of the model part. The three-dimensional object producing apparatus of the present disclosure can improve the ability of the support part to support the model part by fusing at least part of the model region with at least part of the support region.

FIG. 3 is a schematic side view illustrating an example of a model part and a support part according to the three-dimensional object producing apparatus of the present disclosure. In the example illustrated in FIG. 3, the support part 200 is fused with the lower surface of the model part 30. As illustrated in FIG. 3, in an example of the three-dimensional object producing apparatus of the present disclosure, with the model part fused with the support part, deformation of the model part (e.g., warpage of the model part) is suppressed by the supporting ability of the support part, making it possible to improve the object formation accuracy of the three-dimensional object.

That is, by fusing at least part of the model region with at least part of the support region, the three-dimensional object producing apparatus of the present disclosure can suppress deformation of the three-dimensional object to be formed by heating the resin particles and improve the object formation accuracy of the three-dimensional object.

### <Layer forming unit and layer forming step>

The layer forming unit is a unit configured to form a particle layer containing resin particles.

The layer forming step is a step of forming a particle layer containing resin particles.

The layer forming unit is not particularly limited and may be appropriately selected depending on the intended purpose. Examples of the layer forming unit include a combination of a mechanism configured to supply particles and a mechanism configured to form a particle layer while leveling off the particles supplied. The details of the layer forming unit will be described below.

### «Resin particles»

The resin particles refer to particles containing a resin component. In the following description, the resin particles may be referred to as "resin powder". The resin particles may contain any other component than the resin component as needed.

The resin component is not particularly limited and may be appropriately selected depending on the intended purpose. A thermoplastic resin is preferable.

### -Thermoplastic resin-

A thermoplastic resin refers to a resin that plasticizes and melts when heat is applied to the resin.

The thermoplastic resin is not particularly limited and may be appropriately selected depending on the intended purpose. Examples of the thermoplastic resin include crystalline resins, non-crystalline resins, and liquid crystal resins. A crystalline resin is preferable as the thermoplastic resin. Furthermore, a resin having a great difference between the melting start temperature and the recrystallizing temperature during cooling is preferable as the thermoplastic resin.

The crystalline resin refers to a resin having a detectable melting point peak in a measurement according to ISO3146 (Testing Methods for Transition Temperatures of Plastics, JIS K7121).

Examples of the thermoplastic resin include polyolefins, polyamides, polyesters, polyethers, polyphenylene sulfides, polyacetals (POM: Polyoxymethylene), polyimides, and fluororesins. One of these thermoplastic resins may be used alone or two or more of these thermoplastic resins may be used in combination.

Examples of polyolefins include polyethylene (PE) and polypropylene (PP).

Examples of polyamides include: polyamide 410 (PA410), polyamide 6 (PA6), polyamide 66 (PA66), polyamide 610 (PA610), polyamide 612 (PA612), polyamide 11 (PA11), and polyamide 12 (PA12); and semi-aromatic polyamides such as polyamide 4T (PA4T), polyamide MXD6 (PAMXD6), polyamide 6T (PA6T), polyamide 9T (PA9T), and polyamide 10T (PA10T).

Examples of polyesters include polyethylene terephthalate (PET), polybutadiene terephthalate (PBT), and polylactic acid (PLA). Among these polyesters, polyesters containing aromatic series that partially contain terephthalic acid or isophthalic acid are preferable in terms of imparting heat resistance.

Examples of polyethers include polyaryl ketone and polyether sulfone.

Examples of polyaryl ketone include polyether ether ketone (PEEK), polyether ketone (PEK), polyether ketone ketone (PEKK), polyaryl ether ketone (PAEK), polyether ether ketone ketone (PEEKK), and polyether ketone ether ketone ketone (PEKEKK).

The thermoplastic resin may be a thermoplastic resin having two melting point peaks such as PA9T. The thermoplastic resin having two melting point peaks completely melts when the temperature becomes higher than or equal to the higher melting point peak.

For example, polyphthalamide, polyphenylene sulfide, liquid crystal polymers, polysulfone, polyether sulfone, polyetherimide, polyamideimide, polyether ether ketone, and polytetrafluoroethylene are referred to as "super engineering plastics".

The thermoplastic resin is preferably at least one selected from super engineering plastics. When the thermoplastic resin is a super engineering plastic, there are advantages that tensile strength, heat resistance, chemical resistance, and flame retardancy of a three-dimensional object to be formed can be improved and that the three-dimensional object can also be used for industrial applications.

The shape of the resin particles is not particularly limited and may be appropriately selected depending on the intended purpose. Examples of the shape of the resin particles include shapes of circular cylindrical bodies, prismatic bodies, and spherical bodies. Among these shapes, circular cylindrical bodies are preferable.

The circular cylindrical bodies are not particularly limited and may be appropriately selected depending on the intended purpose. Examples of the circular cylindrical bodies include true-circular cylindrical bodies and elliptic cylindrical bodies. Among these circular cylindrical bodies, true-circular cylindrical bodies are preferable.

The circular cylindrical bodies encompass approximately circular cylindrical bodies. An approximate circle means that the ratio of the longer diameter to the shorter diameter (longer diameter/shorter diameter) is 1 or greater but 10 or less. The circle of a circular cylindrical body may be partially chipped.

The prismatic bodies are not particularly limited and may be appropriately selected depending on the intended purpose like the circular cylindrical bodies. The polygon of a prismatic body may be partially chipped.

The spherical bodies are not particularly limited and may be appropriately selected depending on the intended purpose like the circular cylindrical bodies. A spherical body may be partially chipped.

The diameter of the circle of a circular cylindrical body is not particularly limited, may be appropriately selected depending on the intended purpose, and is preferably 5 micrometers or greater but 200 micrometers or less. When the circle of a circular cylindrical body is an ellipse, the diameter refers to the longer diameter.

The length of one side of the polygon of a prismatic body is not particularly limited and may be appropriately selected depending on the intended purpose. The diameter of the minimum circle (minimum bounding circle) that completely encloses the polygon is preferably 5 micrometers or greater but 200 micrometers or less.

The diameter of a spherical body is not particularly limited, may be appropriately selected depending on the intended purpose, and is preferably 5 micrometers or greater but 200 micrometers or less.

The height of a circular cylindrical body, i.e., the distance between the two opposite circles (the distance between the top surface and the bottom surface) is not particularly limited, may be appropriately selected depending on the intended purpose, and is preferably 1 micrometer or greater but 200 micrometers or less.

The height of a prismatic body, i.e., the distance between the two opposite polygons (the distance between the top surface and the bottom surface) is not particularly limited and may be appropriately selected depending on the intended purpose like the height of a circular cylindrical body, and is preferably 1 micrometer or greater but 200 micrometers or less.

The two opposite circles (the top surface and the bottom surface) of a circular cylindrical body may have different areas. However, a ratio (r2/r1) of the diameter r2 of the circle with the larger area to the diameter r1 of the circle with the smaller area is preferably 1.5 or less and more preferably 1.1 or less because a smaller difference between the areas of the two circles enables a higher bulk density.

The two opposite polygons (the top surface and the bottom surface) of a prismatic body may have different areas. However, a ratio (S2/S1) of the area (S2) of the larger polygon to the area (S1) of the smaller polygon is preferably as close to 1 as possible because a smaller difference between the areas of the two polygons enables a higher bulk density.

For example, when forming a three-dimensional object using an HSS-type three-dimensional object producing apparatus, it is possible to improve the accuracy of an object or a molding by increasing the bulk density of the resin particles.

It is preferable that columnar resin particles such as circular cylindrical bodies and prismatic bodies have no vertices in order to increase the bulk density. The vertices refer to the corners present in a columnar body.

### «Particle layer»

The particle layer refers to a layer containing the resin particles. In the following description, the particle layer may be referred to as "powder layer".

The average thickness of the particle layer is not particularly limited, may be appropriately selected depending on the intended purpose, and is preferably 10 micrometers or greater but 100 micrometers or less.

When the layer forming unit forms a particle layer, it is preferable to preheat the resin particles such that the temperature of the resin particles may become a desired preheating temperature. That is, it is preferable that the three-dimensional object producing method of the present disclosure further include a preheating step of preheating the resin particles such that the temperature of the resin particles may become a desired preheating temperature. With this step, the energy applying unit can heat the particle layer to a temperature at which the resin particles can fuse with each other even if energy to be applied to the particle layer by the energy applying unit is low.

The preheating temperature is not particularly limited, may be appropriately selected depending on the intended purpose, and is preferably a temperature between the recrystallizing temperature of the resin particles and the melting temperature of the resin particles. With the preheating temperature between the recrystallizing temperature of the resin particles and the melting temperature of the resin particles, it is possible to suppress deformation such as warpage of a three-dimensional object formed, while also maintaining the fluidity of the resin particles when forming a particle layer.

The preheating unit configured to perform the preheating step is not particularly limited and may be appropriately selected depending on the intended purpose. Examples of the preheating unit include known heaters, heating lamps, and heating rollers.

### <First discharging unit and model region forming step>

The first discharging unit is a unit configured to discharge a model material capable of absorbing energy to a particle layer to form a model region.

The model region forming step is a step of discharging a model material capable of absorbing energy to a particle layer to form a model region.

### <Second discharging unit and support region forming step>

The second discharging unit is a unit configured to discharge a support material to a particle layer to form a support region.

The support region forming step is a step of discharging a support material to a particle layer to form a support region.

The model region forming step can be can be suitably performed by the first discharging unit. The support region forming step can be suitably performed by the second discharging unit.

The first discharging unit and the second discharging unit may be realized as one discharging unit or may be realized as separate discharging units. When the first discharging unit and the second discharging unit are realized as one discharging unit, the discharging unit functions as the first discharging unit when discharging a model material and functions as the second discharging unit when discharging a support material. In the following description, when the first discharging unit and the second discharging unit are not distinguished from each other, the first discharging unit and the second discharging unit may be collectively referred to simply as "discharging units".

The discharging units are not particularly limited and may be appropriately selected depending on the intended purpose. Examples of the discharging units include an inkjet-type discharging head.

The number of discharging units in the three-dimensional object producing apparatus is not particularly limited and may be appropriately selected depending on the intended purpose.

### «Model region»

A model region is a region formed by the first discharging unit discharging a model material capable of absorbing energy to a particle layer. A model region can be formed based on three-dimensional data representing a three-dimensional object to be produced (formed) as a three-dimensional model. For example, a model region may have a shape obtained by slicing the three-dimensional data at predetermined intervals.

In response to receiving energy applied by the energy applying unit and being heated, the model region formed becomes a model part, which constitutes a part of a three-dimensional object, through fusing of the resin particles in the model region with each other. In other words, because the model region formed can absorb energy efficiently owing to the model material discharged, the resin particles become a temperature higher than or equal to the melting point when energy is applied by the energy applying unit, and fuse with each other and solidify.

Fusing the resin particles with each other means heating the resin particles to a temperature higher than or equal to the melting point in order to make the resin particles solidify in a joined form when the temperature becomes lower than the melting point of the resin particles. Therefore, in the region in which the resin particles are fused with each other, at least part of the interface (grain boundary) between the resin particles has disappeared.

### «<Model material»>

The model material is not particularly limited and may be appropriately selected depending on the intended purpose so long as the model material is capable of absorbing energy. Examples of the model material include liquid compositions containing black pigments such as carbon black, liquid compositions containing pigments, and liquid compositions containing metal particles. It is preferable that the liquid compositions be capable of being discharged using an inkjet head. For example, inks can be used as the liquid compositions.

When the energy applying unit is a light irradiation unit, a model material that can generate heat by absorbing light emitted by the light irradiation unit is preferable among these model materials. For example, the aforementioned liquid compositions containing black pigments such as carbon black (black inks) are preferable. When the energy applying unit is a light irradiation unit, a model material that is a liquid composition containing a black pigment can generate heat by efficiently absorbing light emitted by the light irradiation unit. This facilitates fusing of the resin particles in the model region with each other.

### «Support region»

A support region is a region formed by the second discharging unit discharging a support material. For example, the support region becomes a support part for maintaining the shape of a model part, through solidification of the discharged support material to bond the resin particles with each other.

As described below, in the present disclosure, the resin particles in the model region and the resin particles in the support region are fused with each other. That is, in the present disclosure, because at least part of the model region and at least part of the support region are fused with each other, at least part of a model part that is the solidified model region and at least part of a support part that is the solidified support region are fused with each other. Hence, the three-dimensional object producing apparatus of the present disclosure can improve the ability of the support part to support the model part. In the present disclosure, the model region and the support region need only to fuse with each other at a ratio at which the effect of the present disclosure is not spoiled, and all resin particles present at the interface between the model region and the support region need not fuse with each other.

The position and shape of the support region are not particularly limited and may be appropriately selected depending on the intended purpose so long as the support region can contact at least part of the model region. A preferable example of the support region will be described below.

When the layer forming unit forms a second particle layer over a first particle layer, it is preferable that the second discharging unit form a support region in the first particle layer in a manner that the support region in the first particle layer will contact a planned region to be a model region in the second particle layer. That is, it is preferable that the second discharging unit form the support region in a manner that the support region will contact the lower side of the model region.

The planned region to be a model region in the second particle layer can be identified previously, i.e. when forming the first particle layer, based on, for example, three-dimensional data representing a three-dimensional object as a three-dimensional model. In this case, when a model region is formed by discharging the model material to the previously identified planned region in the second particle layer, the support region in the first particle layer is in contact with the model region in the second particle layer. Through this fusing of the model region and the support region, the supporting ability of the support part that is the solidified support region becomes effective to suppress deformation of the model part (for example, warpage of the model part).

A more specific example of the embodiment described above includes fusing a support part 200 with the lower surface of a model part 30 when producing a rectangular-parallelepiped three-dimensional object as illustrated in FIG. 3. Such a support part 200 fused with the lower surface of the model part 30 can suppress warpage of the three-dimensional object more effectively.

When the layer forming unit forms a second particle layer over a first particle layer, it is also preferable that the second discharging unit form a support region in a region in the second particle layer contacting the model region in the first particle layer. That is, it is preferable that the second discharging unit form a support region in a manner that the support region will contact the upper side of the model region. This makes it possible to suppress deformation of a three-dimensional object when, for example, cooling the three-dimensional object after the three-dimensional object is formed.

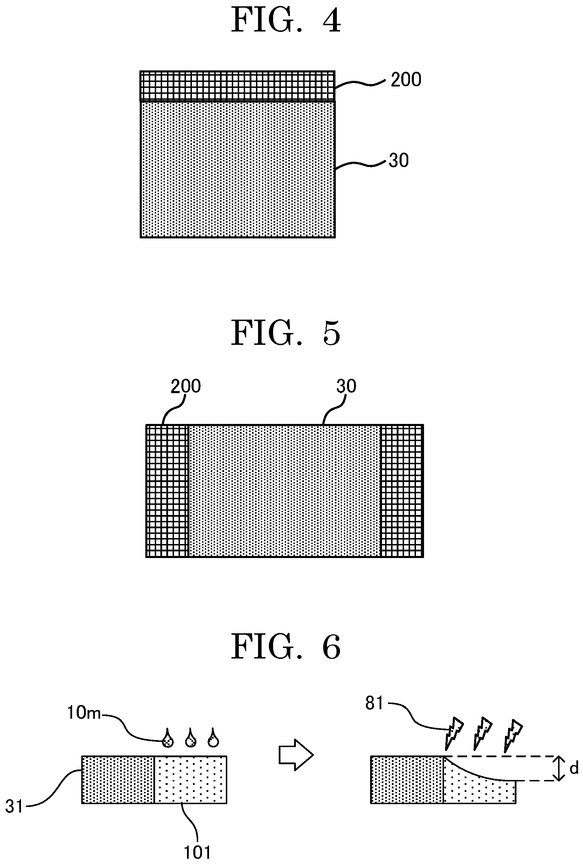

A more specific example of the embodiment described above includes fusing a support part 200 with the upper surface of a model part 30 when producing a rectangular-parallelepiped three-dimensional object as illustrated in FIG. 4.

Furthermore, it is also preferable that a model region to be formed by the first discharging unit and a support region to be formed by the second discharging unit be formed in one particle layer. That is, it is preferable that the second discharging unit form a support region in a manner that the support region will contact a side surface of a model region.

A more specific example of the embodiment described above includes fusing support parts 200 with the side surfaces of a model part 30 when producing a rectangular-parallelepiped three-dimensional object as illustrated in FIG. 5. In this way, warpage of the three-dimensional object can be suppressed.

By forming support regions in a manner that the support regions will contact the side surfaces of a model region, it is possible to suppress elevation of end portions (edges) of the model part.

For example, when no support region is to be formed over a side surface of a model region 101 as illustrated in FIG. 6, only the model region 101 to which a model material 10m has been discharged is melted and densified when the particle layer is heated by the energy applying unit. Therefore, when no support region is formed over a side surface of the model region 101, a meniscus due to the resin in the model part having melted into a liquid state may be formed at the boundary between the model region 101 and a region (particle region) that is not the model region, and the surface may be finished with the end portion of the model part elevated. This elevation of the end portion of the model part is particularly noticeable when a three-dimensional object is formed by the HSS method.

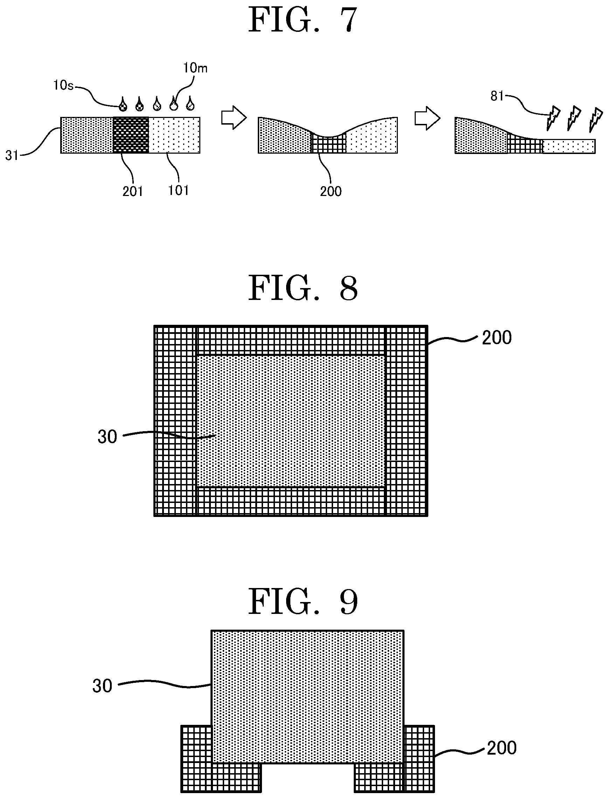

In contrast, when a support region 201 is formed over a side surface of a model region 101 as illustrated in FIG. 7, in an embodiment, the support region 201 (or a support part 200) densifies (compresses) due to a liquid bridge force as illustrated in the center of FIG. 7 when the support region 201 solidifies before heated by the energy applying unit. In this case, as illustrated at the right hand of FIG. 7, an end portion of the model part also compresses along with the compression of the support part 200. Therefore, elevation of an end portion of the model part can be better suppressed than in the example illustrated in FIG. 6.

It is preferable that the second discharging unit form support regions in a manner that support parts will be formed over the entire surface of a three-dimensional object formed of a model part. This makes it possible to more infallibly suppress deformation such as warpage of the three-dimensional object when, for example, the three-dimensional object is cooled after the three-dimensional object is formed.

A more specific example of the embodiment described above includes fusing support parts 200 with the entire surface of a model part 30 when producing a rectangular-parallelepiped three-dimensional object as illustrated in FIG. 8.

In addition, it is preferable that the second discharging unit form a support region in a manner that the support region will contact at least part of a region in a model region constituting a region near a contour of the model region. In other words, it is preferable to form a support region (part) in a manner to contact an end portion of a three-dimensional object formed of a model part. This makes it possible to effectively suppress warpage of the three-dimensional object while saving the amount of the support material to be used.

A more specific example of the embodiment described above includes fusing support parts 200 with the end portions of a model part 30 at the lower surface when producing a rectangular-parallelepiped three-dimensional object as illustrated in FIG. 9.

### <<<Support material>>>

The support material is not particularly limited and may be appropriately selected depending on the intended purpose. A support material that can bond the resin particles with each other is preferable.

Bonding the resin particles with each other means solidifying (fastening) the resin particles with each other through solidification of the support material discharged by the discharging unit. Therefore, in the region (support part) in which the resin particles are bonded with each other, an interface (grain boundary) is present between the resin particles.

The method for solidifying the support material for bonding the resin particles with each other through solidification of the support material discharged is not particularly limited and may be appropriately selected depending on the intended purpose. Examples of the method include a solvent volatilizing method, a thermal curing method, an ultraviolet ray curing method, and a curing agent blending method. Among these methods, the solvent volatilizing method and the thermal curing method are preferable.

### [Solvent volatilizing method]

The solvent volatilizing method is a method of using a support material containing at least: an adhesive component for bonding the resin particles with each other; and a solvent, and volatilizing a part of the support material (for example, the solvent) to solidify the support material. In other words, in the solvent volatilizing method, the support material discharged by the second discharging unit solidifies through volatilization of part of the support material, to form a support part.

The method for volatilizing the solvent of the support material is not particularly limited and may be appropriately selected depending on the intended purpose. Examples of the method include heating the support material by, for example, preheating the resin particles or application of energy by the energy applying unit. In this way, the solvent volatilizing method can solidify the support material using, for example, the energy applying unit without using a special unit for solidifying the support material. This makes it possible to prevent complicating the structure of the three-dimensional object producing apparatus.

The support material in the solvent volatilizing method contain an adhesive component for bonding the resin particles with each other and a solvent, preferably contains an energy absorbent, and further contains other components as needed.

The adhesive component is not particularly limited and may be appropriately selected depending on the intended purpose. Examples of the adhesive component include a soluble polymeric component, an aqueous colloid, and an inorganic solute. Examples of the soluble polymeric component include a water-soluble polymeric component (water-soluble polymer) and an oil-soluble polymeric component (oil-soluble polymer).

The solvent is not particularly limited and may be appropriately selected depending on the intended purpose so long as the adhesive component can dissolve or disperse in the solvent. Examples of the solvent include water and organic solvents.

The energy absorbent is not particularly limited and may be appropriately selected so long as the energy absorbent can absorb energy applied to a particle layer by the energy applying unit. Examples of the energy absorbent include black pigments such as carbon black. With a black pigment contained in the support material in the solvent volatilizing method, when the energy applying unit applies energy to a particle layer, the support material absorbs the energy and generates heat. This promotes volatilization of the solvent and facilitates solidification of the support material.

It is preferable that the content of the energy absorbent in the support material in the solvent volatilizing method be such a content at which when the energy applying unit applies energy to a particle layer, the temperature of the resin particles in a support region will not exceed the melting point of the resin particles. Setting such a content makes it possible to prevent degradation of removability of a support part due to fusing of the resin particles in a support region.

The other components of the support material in the solvent volatilizing method are not particularly limited and may be appropriately selected depending on the intended purpose. Examples of the other components include a colorant, a dispersion stabilizer, a surfactant, a permeation enhancer, a humectant, a fungicide, an antiseptic, an antioxidant, a pH adjustor, a thickener, a filler, a deflocculating agent, and a defoaming agent.

Hence, the support material in the solvent volatilizing method needs not indispensably contain a reactive compound. Therefore, the support material is excellent in storage stability, and in discharging stability when the discharging unit discharges the support material.

It is preferable that at least any one of the melting point and the softening point of the adhesive component of the support material in the solvent volatilizing method be higher than the preheating temperature of the resin particles. This makes it possible to prevent the solidified support material from being melted or softened by heat applied by the resin particles, making it possible to improve the strength of a support part and improve the ability of the support part to support a model part.

The softening point refers to a temperature at which some substances such as resins start to soften and deform in response to temperature elevation. Typically, the temperature at which a substance completely becomes a liquid as the temperature of the substance is raised is referred to as melting point. However, some substances such as resins gradually soften to reach a melted state without exhibiting an apparent melting point, and a clear state change of such substances is difficult to determine. Hence, a term "softening point" may be used to be distinguished from a melting point.

The softening point of the adhesive component in the support material may be a value measured according to, for example, a Vicat softening temperature A50 method (JIS K 7206:1999).

In addition, it is preferable that the boiling point of the solvent of the support material in the solvent volatilizing method be lower than the preheating temperature of the resin particles. This makes it possible for the solvent of the support material discharged by the second discharging unit to be volatilized by heat applied by the resin particles when the resin particles have been preheated. This facilitates solidification of the support material and bonding of the resin particles with each other to form a support part. When it is possible to form a support part easily in a short time, it is possible to improve the productivity of the three-dimensional object producing apparatus.

Furthermore, it is preferable that the support material in the solvent volatilizing method satisfy the two conditions described above, i.e., that at least any one of the melting point and the softening point of the adhesive component be higher than the preheating temperature of the resin particles and that the boiling point of the solvent be lower than the preheating temperature of the resin particles. This makes it possible to improve the ability of a support part to support a model part, and at the same time, to form a support part easily in a short time and improve productivity of the three-dimensional object producing apparatus.

### [Thermal curing method]

The thermal curing method is a method of using a support material containing at least a reactive compound and a curing agent and heating the support material to activate the curing agent and allow the reactive compound to undergo a polymerization reaction to solidify the support material. In other words, in the thermal curing method, in response to being heated, the support material discharged by the second discharging unit undergoes a polymerization reaction and cures, to form a support part.

The method for heating the support material to undergo a curing reaction is not particularly limited and may be appropriately selected depending on the intended purpose. Examples of the method include heating the support material by, for example, application of energy by the energy applying unit. In this way, the thermal curing method can solidify the support material using, for example, the energy applying unit without using a special unit for solidifying the support material. This makes it possible to prevent complicating the structure of the three-dimensional object producing apparatus. Further, the thermal curing method can better improve the ability of a support part to support a model part because a volume change of the support material when cured is small to enable a higher strength of a support part.

The support material in the thermal curing method contains at least a reactive compound and a curing agent, and further contains other components as needed.

The reactive compound is not particularly limited and may be appropriately selected depending on the intended purpose. Examples of the reactive compound include a polymerizable compound. Examples of the polymerizable compound include a compound containing at least one ethylenic unsaturated double bond. An ethylenic unsaturated polymerizable compound has a chemical form of a monofunctional polymerizable compound or a multifunctional polymerizable compound, or a mixture of these compounds.

A monofunctional polymerizable compound is preferable as the polymerizable compound. Examples of the monofunctional polymerizable compound include esters of unsaturated carboxylic acid with polyvalent alcohol compounds, amides of unsaturated carboxylic acid with amine compounds, and acryloylmorpholine. That is, it is preferable that the support material in the thermal curing method contain a monofunctional polymerizable compound. In this case, the support material will not undergo crosslinking and a support part will have a high solubility in a liquid, making it possible to improve removability of the support part.

It is preferable that the thermal decomposition start temperature of a support part be higher than an extrapolated melting end temperature of the resin particles. This can prevent the support part from being decomposed by heat applied by the resin particles, making it possible to suppress degradation of the strength of the support part during object formation and maintain the ability of the support part to support a model part.

The thermal decomposition start temperature means a temperature at which substances such as resins start to decompose in response to temperature elevation. The thermal decomposition start temperature may be a value measured according to, for example, Testing Methods of Plastics by Thermogravimetry (JIS K7120). When thermal decomposition is stepwise mass reduction, the primary start temperature is regarded as the thermal decomposition start temperature.

The extrapolated melting end temperature means a temperature at which melting of substances such as resins ends. The extrapolated melting end temperature may be a value measured according to, for example, Testing Methods for Transition Temperatures of Plastics (JIS K7121).

It is preferable that the thermal decomposition start temperature of a support part be higher than 380 degrees C. In this case, resin particles having a high melting point such as super engineering plastics can be more suitably used. For example, the extrapolated melting end temperature of PEEK (available from Victrex, 150PF), which is an example of super engineering plastics, is 350 degrees C.

In the present disclosure, the support material which contains acryloylmorpholine can improve removability of a support part, which is formed through solidification of the support material.

The curing agent is not particularly limited and may be appropriately selected depending on the intended purpose. Examples of the curing agent include azo compounds and organic peroxides.

The other components of the support material in the thermal curing method are not particularly limited and may be appropriately selected depending on the intended purpose. Examples of the other components include a diluent, a polymerization inhibitor, a chain-transfer agent, a colorant, a dispersion stabilizer, a surfactant, a permeation enhancer, a humectant, a fungicide, an antiseptic, an antioxidant, a pH adjustor, a thickener, a filler, a deflocculating agent, and a defoaming agent.

A specific example composition of the support material in the thermal curing method is presented below. The support material in the thermal curing method is not limited to the one presented below. The example support material presented below can dissolve in water (has water solubility) after solidified. Therefore, it is possible to easily remove a support part formed through solidification of the support material, by immersing the support part in water. A support part formed through solidification of the example support material presented below has a thermal decomposition start temperature of 392 degrees C.
- Acryloylmorpholine (available from Tokyo Chemical Industry Co., Ltd.): 97 parts by mass
- t-Butyl peroxy-2-ethylhexyl monocarbonate (available from NOF Corporation): 2 parts by mass
- BYK-UV3530 (available from BYK Additives & Instruments): 1 part by mass

The ultraviolet ray curing method is a method of using a support material that can cure when irradiated with ultraviolet rays and irradiating a support region with ultraviolet rays by an ultraviolet ray irradiation unit, to cure and solidify the support material.

The curing agent blending method is a method of discharging a curing agent that can cure the support material to a support region to cure and solidify the support material.

### [Removability of support part]

Typically, a support part formed through solidification of the support material to bond the resin particles with each other is removed from a model part constituting a three-dimensional object after formation of the three-dimensional object is completed. Hence, it is preferable that a support part have a physical property that makes the support part easily removable from a model part after formation of a three-dimensional object is completed.

The method for removing a support part is not particularly limited and may be appropriately selected depending on the intended purpose. Examples of the method include a method of blowing off excessive particles adhering to around a three-dimensional object by, for example, air blowing and subsequently immersing the three-dimensional object in the state of having a support part in a liquid that selectively dissolves the support part, and a method of immersing a support part in a liquid that selectively swells the support part to reduce the mechanical strength of the support part and release or destruct the support layer.

Among the methods described above, the method of immersing a three-dimensional object in the state of having a support part in a liquid that selectively dissolves the support part is preferable. In other words, it is preferable to remove a support part formed through solidification of the support material, by immersion in a liquid that does not dissolve the resin particles. This makes it possible to remove the support part easily in a short time, and improve the productivity when producing a three-dimensional object.

When removing a support part by immersion in a liquid that does not dissolve the resin particles, it is possible to remove the support part more easily by heating the liquid or by applying ultrasonic vibration.

When removing a support part by immersing a three-dimensional object in the state of having the support part in a liquid that selectively dissolves the support part, it is preferable that the support material be a material that, when solidified, is soluble in a liquid that does not dissolve the resin particles. This makes it possible to remove the support part easily in a short time and improve the productivity when producing a three-dimensional object.

The liquid that selectively dissolves a support part is not particularly limited and may be appropriately selected depending on the intended purpose. Examples of the liquid include water and organic solvents. Water is preferable in terms of, for example, safety, costs, and environmental impacts.

When water is used as the liquid that selectively dissolves a support part, it is preferable that the support material contain a water-soluble adhesive component. The water-soluble adhesive component is not particularly limited and may be appropriately selected depending on the intended purpose. Examples of the water-soluble adhesive component include polymerizable compounds such as acrylic acid, acrylamide, vinyl alcohol, ethyleneimine, ethylene oxide, N-vinyl-2-pyrrolidone, and acryloylmorpholine, or mixtures and polymers of these polymerizable compounds.

It is preferable that a support region have a bending strength of 1.0 MPa or greater and can be dissolved and removed within 12 hours from when the support region is entirely immersed in tetrahydrofuran or ethanol at 30 times by mass the support region at 25 degrees C, in terms of obtaining a three-dimensional object having an excellent surface property and having little warpage.

The bending strength of a support region is 1.0 MPa or greater, preferably 5 MPa or greater, more preferably 10 MPa or greater, and yet more preferably 30 MPa or greater. The upper limit of the bending strength is not particularly limited, may be appropriately selected depending on the intended purpose, and is preferably 110 MPa or less.

The bending strength of a support region can be obtained by, for example, pouring the support material into a molding die having a shape according to ISO178 at a predetermined ratio between the support material and the resin particles, subsequently heating the resultant to higher than or equal to the boiling point of the solvent to volatilize the solvent, and subsequently performing a bending test and a strength test according to ISO178.

It is preferable that the support region can be dissolved and removed within 12 hours from when the support region is entirely immersed in tetrahydrofuran or ethanol at 30 times by mass the support region at 25 degrees C, and that after heated at 150 degrees C for 4 hours, the support region can be dissolved and removed within 12 hours from when the support region is entirely immersed in tetrahydrofuran or ethanol at 30 times by mass the support region at 25 degrees C.

None of the existing support materials have been found soluble in an organic solvent after exposed to such a high temperature as described above for some hours. The molded material as used herein is not particularly limited, but when the resin composition for producing a three-dimensional object of the present disclosure is used as the support material for supporting a model part of a three-dimensional object, the support material has a high removability and can provide an excellent object formation efficiency.

There is a need that the support material be soluble in tetrahydrofuran (THF) as an organic solvent. Other examples of the organic solvent include ethyl acetate, toluene, styrene, xylene, acetone, acetonitrile, N,N-dimethyl formamide (DMF), dimethyl sulfoxide (DMSO), N-methyl pyrrolidone (NMP), diethylene glycol monoether, triethylene glycol monoether, propylene glycol monomethyl ether acetate (PGMEA), propylene glycol monomethyl ether (PGME), ethylene acetate, triacetin, methyl ethyl ketone (MEK), methyl isobutyl ketone (MIBK), hexane, cyclohexane, dichloromethane, chloroform, pyridine, spearmint oil, carvon, limonene, dibenzyl ether, cresol, phenol, 1,2-propylene carbonate, dimethyl ether, and dimethyl siloxane. It is preferable that the support material be also soluble in THF, toluene, acetone, DMF, DMSO, PGMEA, PGME, MEK, hexane, spearmint oil, carvon, limonene, and dimethyl ether among these organic solvents in terms of safety, and it is more preferable that the support material be also soluble in acetone, cyclohexane, and spearmint oil. In the present disclosure, because the molded material can be easily removed without using a strongly alkaline material, dangers involved in use of a strongly alkaline material can be avoided. Moreover, the organic solvents as described above tend not be a factor of environmental contamination.

### <Energy applying unit and energy applying step>

The energy applying unit is a unit configured to apply energy to a model region. For example, the energy applying unit is configured to apply energy to a model region to fuse the resin particles in the model region with each other and fuse the resin particles in the model region with the resin particles in a support region contacting the model region.

The energy applying step is a step of applying energy to a model region to fuse the resin particles in the model region with each other and fuse the resin particles in the model region with the resin particles in a support region contacting the model region.

The energy applying unit is not particularly limited and may be appropriately selected depending on the intended purpose, so long as the energy applying can heat a particle layer by applying energy. Examples of the energy applying unit include a light irradiation unit configured to emit light, a microwave irradiation unit configured to emit microwaves, and an electron beam irradiation unit configured to emit electron beams.

For example, the energy applying unit is configured to apply energy to a model region in a particle layer and heat the model region, to fuse the resin particles in the model region with each other and form a model part constituting a part of a three-dimensional object. Further, the energy applying unit is configured to apply energy to about the boundary between a model region and a support region in a particle layer and heat the boundary, to fuse the resin particles in the model region with the resin particles in the support region.

It is preferable that the energy applying unit be configured to apply energy to a support region in a particle layer and heat the support region. This promotes solidification of the support material in the support region and formation of a support part in a short time, making it possible to improve the productivity of the three-dimensional object producing apparatus.

Among the energy applying units mentioned above, a light irradiation unit is preferable. When the energy applying unit is a light irradiation unit and the model material can generate heat by absorbing light, it is possible to form a three-dimensional object efficiently in a short time, making it possible to improve the productivity of the three-dimensional object producing apparatus.

The light irradiation unit is not particularly limited and may be appropriately selected depending on the intended purpose. Examples of the light irradiation unit include a halogen lamp, a laser irradiation unit, a LED irradiation unit, and a xenon lamp.

Specific examples of commercially available products of halogen lamps that can be used as the light irradiation unit include a line type halogen light source 3W/mm available from Ushio Inc. (with a color temperature of 3,000 K and an energy density of 0.04 W/mm²), and a line type halogen light source 3W/mm available from Ushio Inc. (with a color temperature of 3,300 K and an energy density of 0.04 W/mm²).

It is preferable that the energy applying unit collectively perform fusing of the resin particles in a model region with each other and fusing of the resin particles in a model region with the resin particles in a support region contacting the model region. In other words, it is preferable that the energy applying unit perform formation of a model part and fusing of the model part with a support part by one scan (in one go). This makes it possible to form a three-dimensional object efficiently in a short time, making it possible to improve the productivity of the three-dimensional object producing apparatus.

The number of energy applying units in the three-dimensional object producing apparatus is not particularly limited and may be appropriately selected depending on the intended purpose.

When the three-dimensional object producing apparatus includes a plurality of light irradiation units as the energy applying units, it is preferable to perform fusing of the resin particles in a model region with each other and fusing of the resin particles in the model region with the resin particles in a support region contacting the model region by emitting rays of light varied in energy. This makes it possible to select suitable energy adapted to fusing of the resin particles in a model region with each other and to fusing of the resin particles in the model region with the resin particles in a support region contacting the model region, making it possible to better improve the ability of a support part to support a model part.

Further, when the three-dimensional object producing apparatus includes a plurality of light irradiation units, it is preferable to perform fusing of the resin particles in a model region with the resin particles in a support region contacting the model region, by emitting light having a wavelength shorter than the wavelength of light emitted for fusing the resin particles in the model region with each other.

In this case, even when, for example, a support region is to be formed in a manner to contact the lower side (lower surface) of a model region, it is possible to more infallibly heat and fuse the resin particles located at the boundary between the model region and the support region by means of high transmission light having a short wavelength. Hence, by performing fusing of the resin particles in the model region with the resin particles in the support region contacting the model region by emitting light having a wavelength shorter than the wavelength of light emitted for fusing the resin particles in the model region with each other, it is possible to better improve the ability of a support part to support a model part.

In this case, a line type halogen light source 3W/mm available from Ushio Inc. (with a color temperature of 3,000 K and an energy density of 0.04 W/mm²) can be used as the light irradiation unit used for fusing the resin particles in the model region with each other. A line type halogen light source 3W/mm available from Ushio Inc. (with a color temperature of 3,300 K and an energy density of 0.04 W/mm²) can be used as the light irradiation unit used for fusing the resin particles in the model region with the resin particles in the support region.

It is preferable that the temperature of a model region during heating be higher than or equal to the extrapolated melting end temperature of the resin particles and lower than the thermal decomposition start temperature of a support part. This can prevent the support part from being decomposed by heat applied by the resin particles, making it possible to suppress degradation of the strength of the support part during object formation and maintain the ability of the support part to support a model part.

Setting a model region at a temperature higher than or equal to the extrapolated melting end temperature of the resin particles during heating better ensures melting of the resin. Further, setting a model region at a temperature lower than the thermal decomposition start temperature of a support part during heating can prevent thermal decomposition of the support part and suppress degradation of the strength of the support part, making it possible to prevent the model part from being detached from the support part and prevent failure to suppress deformation of the model part accompanying deformation of the support part.

The temperature of a model region during heating can be adjusted based on, for example, a preheating temperature of a particle layer (powder layer) and conditions for applying energy. Examples of the conditions for applying energy include the output power of a light source and a time for which energy is applied.

### <Other units>

The other units are not particularly limited and may be appropriately selected depending on the intended purpose. Examples of the other units include a maintenance unit configured to suppress occurrence of discharging failures in the discharging unit, and a controlling section configured to control the three-dimensional object producing apparatus.

The three-dimensional object producing apparatus of the present disclosure can produce (form) a three-dimensional object by repeatedly operating at least the layer forming unit, the first discharging unit, the second discharging unit, and the energy applying unit. Likewise, the three-dimensional object producing method of the present disclosure can produce (form) a three-dimensional object by repeatedly performing at least the layer forming step, the model region forming step, the support region forming step, and the energy applying step.

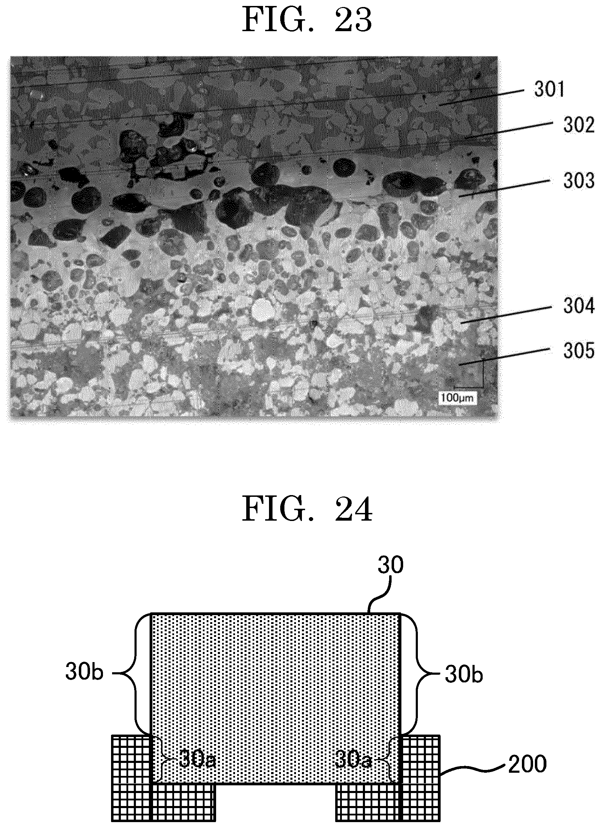

The state of the interface between a model region (model part) and a support region (support part) will be described with reference to FIG. 23.

FIG. 23 is an image of a cross-section of the interface between a model part and a support part. An image capturing sample was produced by embedding in an epoxy resin, a sample produced with the three-dimensional object producing apparatus of the present disclosure, and sectioning the sample with a glass knife. A digital microscope VHX-2000 (available from Keyence Corporation) was used for capturing the electron microscopic image of FIG. 23.

In the electron microscopic image illustrated in FIG. 23, the region denoted by the reference numeral 301 is the resin particles in the model part. It can be seen that the resin particles had melted to have the grain boundaries disappeared and had fused with each other.

The region denoted by the reference numeral 302 is the epoxy resin packed into the voids in the model part in the embedding treatment for the cross-sectional observation.

The region denoted by the reference numeral 303 is the interface between the model part and the support part. It can been seen that the resin particles in the model part and support part had melted to have the grain boundaries disappeared and had fused with each other.

The region denoted by the reference numeral 304 is the resin particles in the support part. Grain boundaries are observed, and it can been seen that the resin particles had bonded with each other.

The region denoted by the reference numeral 305 is the region in which the support material had solidified.

Hence, the three-dimensional object producing apparatus of the present disclosure fuses a model part and a support part with each other, and can suppress deformation of the model part by the supporting ability of the support part and improve the object formation accuracy of a three-dimensional object.

### <Material set for producing three-dimensional object>

A material set for producing a three-dimensional object of the present disclosure can be suitably used in the three-dimensional object producing apparatus of the present disclosure and the three-dimensional object producing method of the present disclosure.

That is, the material set for producing a three-dimensional object of the present disclosure is a material set for producing a three-dimensional object used in the three-dimensional object producing apparatus of the present disclosure or in the three-dimensional object producing method of the present disclosure, and includes a support material and resin particles. The thermal decomposition start temperature of a support part formed through solidification of the support material is higher than the extrapolated melting end temperature of the resin particles (the thermal decomposition start temperature of a support part is higher than the extrapolated melting end temperature of the resin particles).

This can prevent the support part from being decomposed by heat applied by the resin particles, making it possible to suppress degradation of the strength of the support part during object formation and maintain the ability of the support part to support a model part.

The embodiments of the present disclosure will be described below. The present disclosure should not be construed as being limited to these embodiments.

For example, the number, position, and shape of the constituent members are not limited to as specified in the embodiments, but may be any number, position, and shape that are suitable for working the present disclosure.

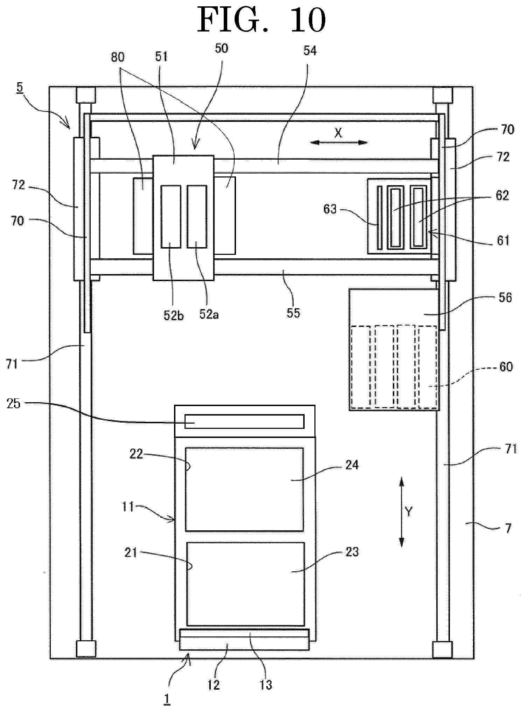

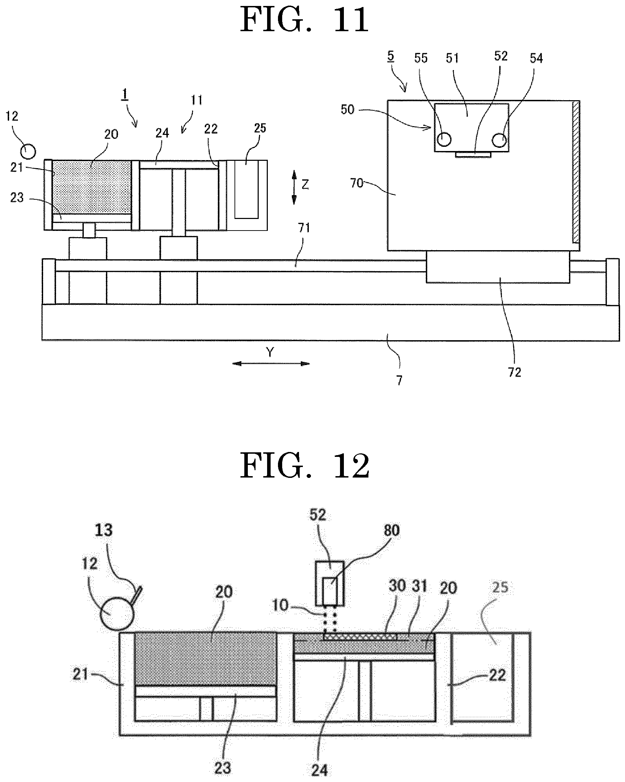

FIG. 10 is a schematic plan view of the three-dimensional object producing apparatus of the present disclosure according to an embodiment. FIG. 11 is a schematic side view of the three-dimensional object producing apparatus of the present disclosure according to an embodiment. FIG. 12 is a schematic side view illustrating an object forming section of the three-dimensional object producing apparatus of the present disclosure according to an embodiment.

An embodiment of the three-dimensional object producing apparatus of the present disclosure illustrated in FIG. 10 to FIG. 12 includes an object forming section 1 in which an object forming layer (model part) 30, which is a layered object formed through fusing of the resin particles, is formed, a discharging unit 5 serving as a first discharging unit configured to discharge a model material to a particle layer 31 densely laid in a layer form in the object forming section 1 and as a second discharging unit 2 configured to discharge a support material to the particle layer 31, and a light irradiation unit 80 serving as an energy applying unit configured to irradiate the particle layer 31 with light 81. The model material and the support material may be referred to collectively as "object forming liquids 10".

The object forming section 1 includes, for example, a particle tank 11, and a flattening roller 12 as a rotating body, which is an example of a layer forming unit (a flattening member or a recoater). The flattening member may be, for example, a plate-shaped member (blade) instead of a rotating body.

The particle tank 11 includes a supplying tank 21 configured to supply resin particles 20, and an object forming tank 22 in which object forming layers 30 are laminated to form a three-dimensional object. Before object formation, the resin particles 20 are supplied into the supplying tank 21. The bottom of the supplying tank 21 is liftable upward and downward in the vertical direction (height direction) as a supplying stage 23. Likewise, the bottom of the object forming tank 22 is liftable upward and downward in the vertical direction (height direction) as an object forming stage 24. A three-dimensional object, which is laminated object forming layers 30, is formed over the object forming stage 24.

The supplying stage 23 and the object forming stage 24 are lifted upward and downward in the direction of the arrow Z (height direction) by means of a motor.

The flattening roller 12 is configured to supply particles 20, which have been supplied onto the supplying stage 23 of the supplying tank 21, to the object forming tank 22, and level off and flatten the particles 20 as a flattening member, to form a particle layer 31.

The flattening roller 12 is disposed reciprocably relative to the stage surface of the object forming stage 24 (stage surface: a surface over which the resin particles 20 are placed) in the direction of the arrow Y along the stage surface, and is moved by means of a reciprocating mechanism. The flattening roller 12 is driven to rotate by means of a motor 26.

The discharging unit 5 includes a liquid discharging unit 50 configured to discharge the object forming liquids 10 to the particle layer 31 over the object forming stage 24.

The liquid discharging unit 50 includes a carriage 51, and two (may be one or three or more) liquid discharging heads (hereinafter, referred to simply as "heads") 52a and 52b mounted on the carriage 51.

The carriage 51 is movably held on guide members 54 and 55. The guide members 54 and 55 are liftably held on side panels 70 and 70 on both sides.

The carriage 51 is reciprocated in the main scanning direction, which is the direction of the arrow X (hereinafter, referred to simply as "X direction", the same applies to Y and Z), by means of an X direction scanning motor 550 described below, via a main scanning movement mechanism formed of a pulley and a belt.

The two heads 52a and 52b (hereinafter, referred to as "heads 52" when the two heads are not distinguished from each other) each have a plurality of nozzle lines in each of which a plurality of nozzles through which a liquid is discharged are arranged. The nozzle lines of the heads 52 are configured to discharge the object forming liquids 10. For example, the head 52a may be configured to discharge the model material, and the head 52b may be configured to discharge the support material. In this case, the head 52a is an example of the first discharging head, and the head 52b is an example of the second discharging head.

The heads 52 may be configured to discharge object forming liquids colored in, for example, cyan, magenta, yellow, and black. The heads 52 are not limited to this embodiment.

A plurality of tanks 62 containing these object forming liquids respectively are mounted on a tank loading section 56, and the object forming liquids 10 are supplied into the heads 52a and 52b through, for example, supplying tubes.

A maintenance mechanism 61 configured to maintain and repair the heads 52 of the liquid discharging unit 50 is disposed at one side in the X direction.

The maintenance mechanism 61 includes caps 62 and a wiper 63. The maintenance mechanism 61 is configured to bring the caps 62 into close contact with the nozzle surfaces (surfaces in which the nozzles are formed) of the heads 52 and suck the object forming liquids 10 through the nozzles to get rid of particles clogging the nozzles or the object forming liquids having thickened. The maintenance mechanism 61 is also configured to wipe the nozzle surfaces with the wiper 63 to form a meniscus in the nozzles (the nozzles are at negative pressure internally). While the object forming liquids 10 are not being discharged, the maintenance mechanism 61 covers the nozzle surfaces of the heads with the caps 62 to prevent mixing of the resin particles 20 into the nozzles or drying of the object forming liquids 10.

The discharging unit 5 includes slider units 72 movably held on guide members 71 disposed over a base member 7, and the entire discharging unit 5 can reciprocate in the Y direction (sub-scanning direction) orthogonal to the X direction. The entire discharging unit 5 is reciprocated in the Y direction by means of a scanning mechanism including a motor 552 described below.

The liquid discharging unit 50 is disposed liftable upward and downward in the direction of the arrow Z together with the guide members 54 and 55. The liquid discharging unit 50 is lifted upward and downward in the Z direction by means of a lifting mechanism including a motor 551 described below.

A light irradiation unit 80 is configured to scan the regions to which the object forming liquids 10 are discharged from the heads 52 while emitting light 81 to the regions. Being provided in the carriage 51, the light irradiation unit 80 can be driven together with the heads 52, but the light irradiation unit 80 may also be driven alone in the X direction if a separate drive source is provided.

The light irradiation unit 80 may be provided on both of the right-hand and left-hand sides of the heads 52 or may be provided on either side.

The object forming section 1 will be described in detail below.

The particle tank 11 includes the supplying tank 21, the object forming tank 22, and an excessive particle receiving tank 25, which are tanks having a box-like shape with an opened top. The supplying stage 23 and the object forming stage 24 are disposed liftably upward and downward in the supplying tank 21 and the object forming tank 22 respectively.

The side surface of the supplying stage 23 is disposed in contact with the internal surface of the supplying tank 21. The side surface of the object forming stage 24 is disposed in contact with the internal surface of the object forming tank 22. The upper surfaces of the supplying stage 23 and object forming stage 24 are kept level.

The flattening roller 12 transfers and supplies the resin particles 20 from the supplying tank 21 to the object forming tank 22, and levels off and flattens the surface to form a particle layer 31, which is a swarm of particles in a layer state having a predetermined thickness.

The flattening roller 12 is a rod-like member longer than the internal dimension of the object forming tank 22 and the supplying tank 21 (internal dimension: width of a portion supplied or filled with the resin particles 20), and is reciprocated in the Y direction (sub-scanning direction) along the stage surfaces by means of a reciprocating mechanism.

The flattening roller 12 is configured to horizontally move from outside the supplying tank 21 in a manner to pass above the supplying tank 21 and the object forming tank 22 while being rotated by means of the motor 26. In this way, the resin particles 20 are transferred and supplied to the object forming tank 22, and the flattening roller 12 flattens the particles 20 while passing above the object forming tank 22, to form a particle layer 31.

As illustrated in FIG. 12, there is provided a particle removing plate 13, which is a particle removing member configured to come into contact with the circumferential surface of the flattening roller 12 to remove the resin particles 20 adhering to the flattening roller 12.

The particle removing plate 13 is configured to move together with the flattening roller 12 in a state of having contact with the circumferential surface of the flattening roller 12. The particle removing plate 13 may be disposed in a counter direction or a forward direction when the flattening roller 12 rotates in the rotating direction to perform flattening.

In the present embodiment, the particle tank 11 of the object forming section 1 includes three tanks, namely the supplying tank 21, the object forming tank 22, and the excessive particle receiving tank 25. However, instead of providing the supplying tank 21, it may be possible to supply particles to the object forming tank 22 from a particle supplying device and flatten the particles by means of a flattening unit.

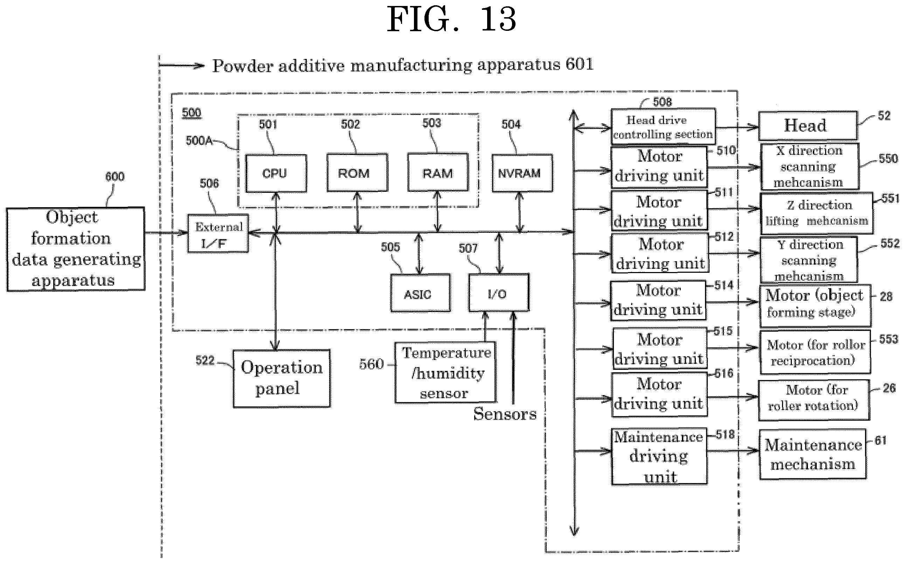

Next, the controlling section of the three-dimensional object producing apparatus 601 will be generally described with reference to FIG. 13.

The controlling section 500 serving as a controlling unit includes a main controlling section 500A including: a CPU 501 configured to control the entire three-dimensional object producing apparatus; a ROM 502 configured to store programs including a program causing the CPU 501 to perform control on a three-dimensional object forming operation including control relating to the present disclosure, and other fixed data; and a RAM 503 configured to temporarily store, for example, object formation data.

The controlling section 500 includes a nonvolatile memory (NVRAM) 504 configured to retain data even while the power supply to the apparatus is cut off. The controlling section 500 includes an ASIC 505 configured to perform image processing for performing various signal processing on image data, and process input/output signals for controlling the entire apparatus.

The controlling section 500 includes an I/F 506 configured to send and receive data and signals and used for receiving object formation data from an external object formation data generating apparatus 600. The object formation data generating apparatus 600 is an apparatus configured to generate object formation data, which is slice data representing a final object sliced per object forming layer. The object formation data generating apparatus 600 can be realized by an information processing apparatus such as a personal computer.

The controlling section 500 includes an I/O 507 configured to receive sensing signals from various sensors.

The controlling section 500 includes a head drive controlling section 508 configured to control driving of the heads 52 of the liquid discharging unit 50.

The controlling section 500 also includes a motor driving unit 510 configured to drive a motor constituting an X direction scanning mechanism 550 configured to move the carriage 51 of the liquid discharging unit 50 in the X direction (main scanning direction), and a motor driving unit 512 configured to drive a motor constituting a Y direction scanning mechanism 552 configured to move the liquid discharging unit 5 in the Y direction (sub-scanning direction).

The controlling section 500 includes a motor driving unit 511 configured to drive a motor constituting a Z direction lifting mechanism 551 configured to move (lift) the carriage 51 of the liquid discharging unit 50 upward and downward in the Z direction. In lifting upward and downward in the direction of the arrow Z, the entire discharging unit 5 may be lifted upward and downward.

The controlling section 500 includes a motor driving unit configured to drive a motor configured to lift the supplying stage 23 upward and downward, and a motor driving unit 514 configured to drive a motor 28 configured to lift the object forming stage 24 upward and downward.

The controlling section 500 includes a motor driving unit 515 configured to drive a motor 553 for a reciprocating mechanism configured to move the flattening roller 12, and a motor driving unit 516 configured to drive the motor 26 configured to drive rotation of the flattening roller 12.

The controlling section 500 includes a supplying system driving unit configured to drive a particle supplying device configured to supply the particles 20 to the supplying tank 21, and a maintenance driving unit 518 configured to drive the maintenance mechanism 61 for the liquid discharging unit 50.

Sensing signals of, for example, a temperature/humidity sensor 560 configured to detect the temperature and humidity as the environmental conditions of the apparatus and sensing signals of other sensors are input to the I/O 507 of the controlling section 500.

An operation panel 522 for inputting and displaying needed information of the apparatus is coupled to the controlling section 500.

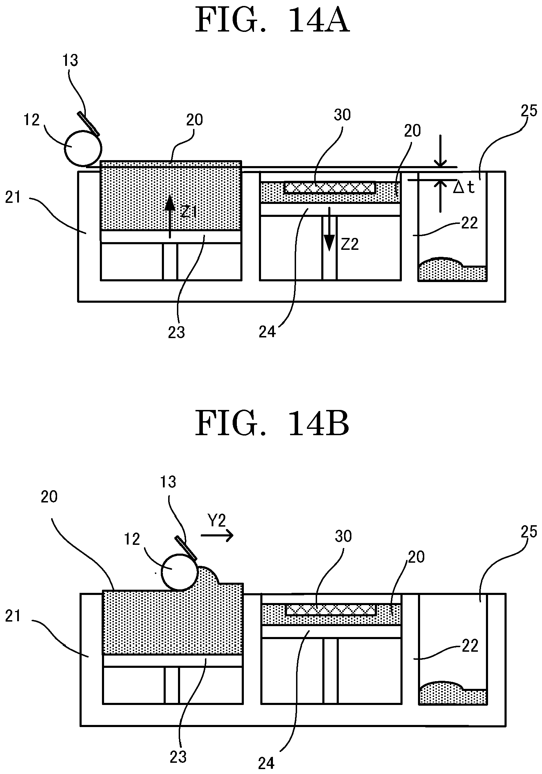

Next, the flow of production (formation) of a three-dimensional object will be described with reference to FIG. 14A to FIG. 14F. FIG. 14A to FIG. 14F are exemplary diagrams illustrating an example flow of formation of a three-dimensional object.

The description will start from a state that a first object forming layer 30 has been formed over the object forming stage 24 of the object forming tank 22.

When forming the next object forming layer 30 over the object forming layer 30, the supplying stage 23 of the supplying tank 21 is lifted upward in the Z1 direction and the object forming stage 24 of the object forming tank 22 is lifted downward in the Z2 direction as illustrated in FIG. 14A.

The distance by which the object forming stage 24 is lifted downward is set such that the interval between the upper surface of the object forming tank 22 (the surface of the particle layer) and the lower side (the lower tangential portion) of the flattening roller 12 is Δt. The interval Δt corresponds to the thickness of a particle layer 31 to be formed next. The interval Δt is preferably about from several tens of micrometers through 100 micrometers.

Next, as illustrated in FIG. 14B, the flattening roller 12 is moved in the Y2 direction (toward the object forming tank 22) while being rotated in the forward direction (the direction of the arrow), to transfer and supply the resin particles 20 located above the upper surface level of the supplying tank 21 to the object forming tank 22 (supplying of particles).

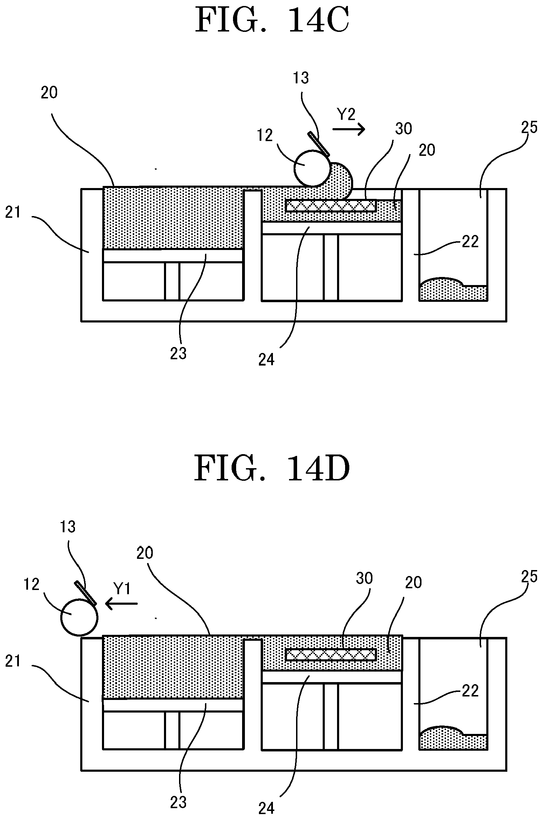

Then, the flattening roller 12 is moved in parallel with the stage surface of the object forming stage 24 of the object forming tank 22 as illustrated in FIG. 14C, to form a particle layer 31 having a predetermined thickness Δt over the object forming layer 30 over the object forming stage 24 as illustrated in FIG. 14D (flattening). After the particle layer 31 is formed, the flattening roller 12 is moved in the Y1 direction to be returned to the initial position as illustrated in FIG. 14D.

The flattening roller 12 is configured to be able to move with a constant distance kept from the upper surface level of the object forming tank 22 and the supplying tank 21. With the ability to move keeping a constant distance, the flattening roller 12 can form a particle layer 31 having a uniform thickness Δt over the object forming tank 22 or over the object forming layer 30 already formed, while conveying the resin particles 20 to the top of the object forming tank 22.

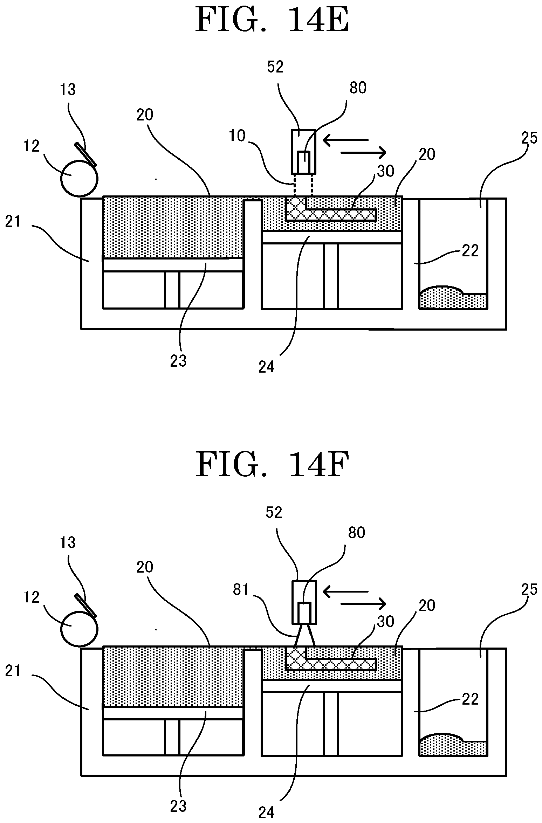

Subsequently, as illustrated in FIG. 14E, liquid droplets of the object forming liquids 10 are discharged from the heads 52 of the liquid discharging unit 50 to desired positions in the object forming tank 22, to form at least any one of a model region and a support region. Then, as illustrated in FIG. 14F, the light irradiation unit 80 scans over the object forming tank 22 while emitting light 81, to heat the particle layer 31 and fuse the resin particles with each other, to form at least any one of a model part (object forming layer) 30 and a support part.

Next, the step of forming a particle layer 31 through supplying of the resin particles and flattening, the step of discharging the object forming liquids from the heads 52, and the energy applying step by the light irradiation unit 80 described above are repeated, to form a new object forming layer 30. Here, the new object forming layer 30 and the underlying object forming layer 30 are integrated and constitute a part of a three-dimensional object.

Afterwards, the step of forming a particle layer 31 through supplying of the resin particles and flattening, the step of discharging the object forming liquids from the heads 52, and the heating by the light irradiation unit 80 are repeated a needed number of times, to produce a three-dimensional object (stereoscopic object).

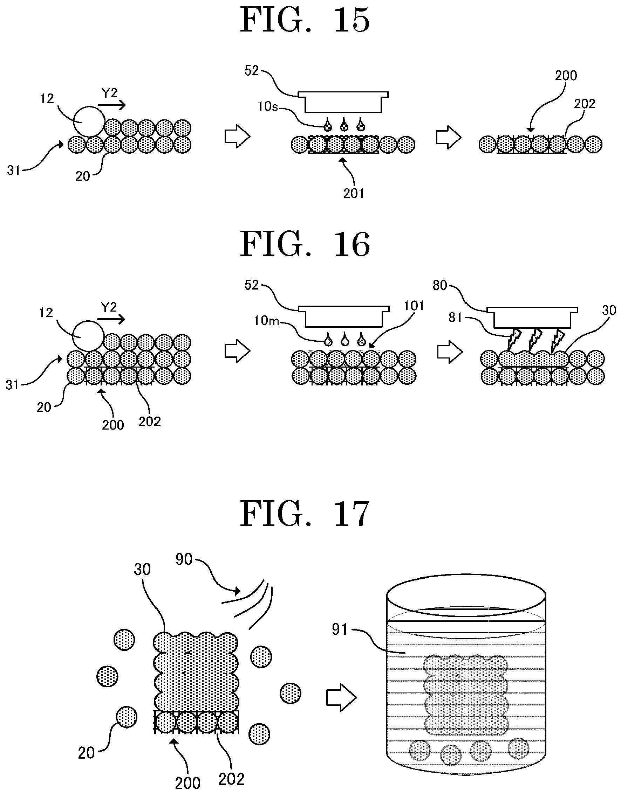

FIG. 15 is a diagram illustrating an example flow when forming a support region.

First, as illustrated at the left-hand side of FIG. 15, the flattening roller 12 is moved in the direction of the arrow Y2 while being rotated, to form a particle layer 31 containing the resin particles 20. Next, as illustrated at the center of FIG. 15, the head 52 discharges the support material (support ink or support liquid composition) 10s to the particle layer 31, to form a support region 201. Then, as illustrated at the right-hand side of FIG. 15, the support material 10s in the support region formed is solidified by, for example, heat from the resin particles 20 preheated, to become a solidified support material 202. The resin particles 20 are bonded with each other by the solidified support material 202, to become a support part 200.

FIG. 16 is a diagram illustrating a model region and an example flow when forming a model part.

First, as illustrated at the left-hand side of FIG. 16, while being rotated, the flattening roller 12 is moved in the direction of the arrow Y2 to the top of the particle layer 31 in which the support region 200 formed by the operation illustrated in FIG. 15 is present, to form a new particle layer 31. Next, as illustrated at the center of FIG. 16, the head 52 discharges a model material (model ink or model liquid composition) 10m to the particle layer 31, to form a model region 101.

Then, as illustrated at the right-hand side of FIG. 16, the resin particles 20 in the model region 101 formed are fused with each other to become a model part (object forming layer) 30, through, for example, absorption of light 81 and generation of heat by the model material 10m when heated by the light 81 emitted by the light irradiation unit 80. Here, the resin particles 20 in part of the model region 101 and the resin particles 20 in part of the support region 201 (support part 200) are also heated by the light 81 emitted by the light irradiation unit 80 and fused with each other.

The steps illustrated in FIG. 16 are repeated a predetermined number of times, to laminate model parts 30 and produce a three-dimensional object.

When a model region to be formed by the first discharging unit and a support region to be formed by the second discharging unit are formed in one particle layer when, for example, producing a rectangular-parallelepiped three-dimensional object illustrated in FIG. 9, there is a region where a model part 30 and a support part 200 adjoin each other. In such a case, it is preferable that the model region to be formed by the first discharging unit be formed before the support region to be formed by the second discharging unit.

For example, when support parts 200 are provided at ends of a model part 30 at the bottom surface side as illustrated in FIG. 24, the vertical surfaces of the model part 30 has model part surfaces 30a adjoining (contacting) the support parts 200 and model part surfaces 30b not adjoining (not contacting) the support parts 200. In this case, when forming a model part 30 and support parts 200 in one particle layer, forming a model region to be formed by the first discharging unit before support regions to be formed by the second discharging unit in the regions where the model part 30 and the support parts 200 are to adjoin each other makes it possible to suppress variation in the surface property between model part surfaces 30a to adjoin the support parts 200 and model part surfaces 30b not to adjoin the support parts 200.

That is, when forming a model part 30 and support parts 200 in one particle layer, forming the model part 30 first makes it possible to suppress the formed model part 30 from having surface property variation that may occur if the model material is discharged to near the support material that has solidified to cause variations in model material permeation and in heat transfer between the model material located near the support material and the model material located otherwise. Further, when forming a model part 30 and support parts 200 in one particle layer, forming the model part 30 first makes it possible to suppress formation of, for example, steps between model part surfaces 30a adjoining the support parts 200 and model part surfaces 30b not to adjoin the support parts 200.

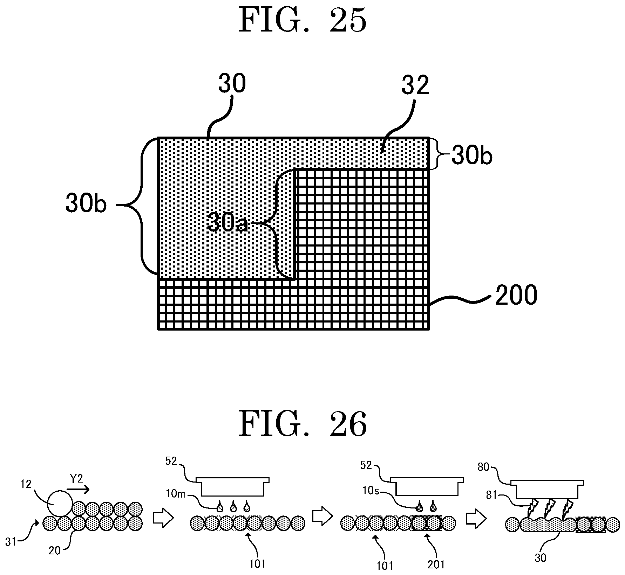

FIG. 25 is a schematic side view illustrating another example of a model part and a support part according to the three-dimensional object producing apparatus of the present disclosure.

When forming a model part 30 having an eave-like portion (overhang portion) 32 as illustrated in FIG. 25, it can be assumed that the eave-like portion 32 may become a thin plate-like shape and is likely to deform during formation. Therefore, it is preferable to support the eave-like portion 32 with a support part 200 as illustrated in FIG. 25. Also in the example illustrated in FIG. 25, the vertical surfaces of the model part 30 has a model part surface 30a adjoining (contacting) the support part 200 and model part surfaces 30b not adjoining (not contacting) the support part 200.

Hence, also when forming the model part 30 having the shape illustrated in FIG. 25, it is preferable to form the model region to be formed by the first discharging unit before the support region to be formed by the second discharging unit. In other words, when forming a region in which a model region and a support region adjoin each other in one particle layer, it is preferable that the model region be formed by the first discharging unit before the support region is formed by the second discharging unit. This makes it possible to suppress variation in the surface property between a model part surface 30a to adjoin the support part 200 and model part surfaces 30b not to adjoin the support part 200.

FIG. 26 is a view illustrating an example flow when forming a model region and a model part in one particle layer.

In the example illustrated in FIG. 26, first, the flattening roller 12 is moved in the direction of the arrow Y2 while being rotated, to form a particle layer 31 containing the resin particles 20. When forming the particle layer 31, the resin particles 20 are heated such that the temperature of the resin particles 20 becomes a desired preheating temperature. Next, the head 52 discharges the model material (model ink or model liquid composition) 10m to the particle layer 31, to form a model region 101. Subsequently, the head 52 discharges the support material (support ink or support liquid composition) 10s to the particle layer 31, to form a support region 201. When a support material of a thermal curing type is used as the support material 10s, the reactive compound in the support material 10s undergoes a polymerization reaction in response to the thermal energy from the heating to the desired preheating temperature, to solidify the support material and bond the resin particles 20 with each other, to form a support part 200.

Next, the light irradiation unit 80 irradiates and heats the resin particles 20 in the formed model region 101 with light 81, and for example, the model material 10m absorbs the light 81 and generates heat, to fuse the resin particles 20 with each other and form a model part (object forming layer) 30. Here, the resin particles 20 in part of the model region 101 and the resin particles 20 in part of the support region 201 (support part 200) also fuse with each other through being heated by the light 81 emitted by the light irradiation unit 80.

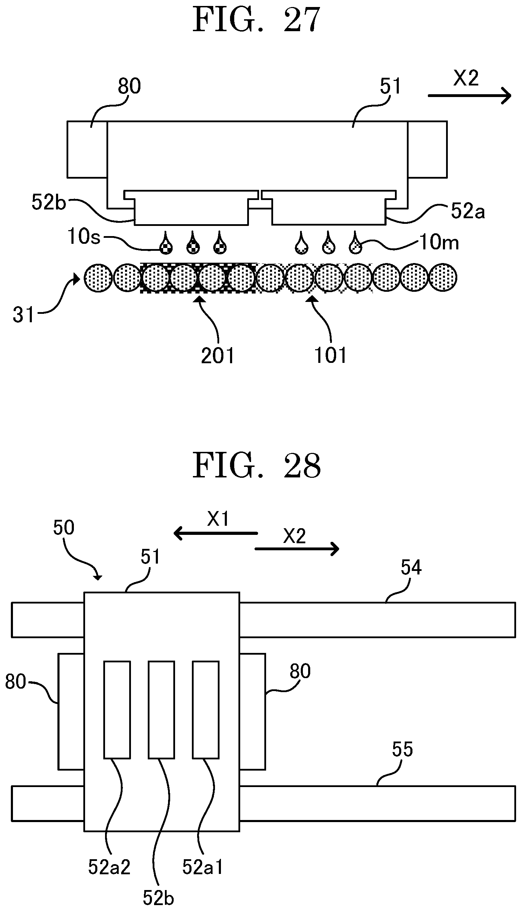

FIG. 27 is a schematic side view illustrating an example structure of a carriage of the three-dimensional object producing apparatus.

In the example illustrated in FIG. 27, the carriage 51 is mounted with two heads 52a and 52b. The head 52a (an example of the first discharging unit) is configured to discharge the model material 10m, and the head 52b (an example of the second discharging unit) is configured to discharge the support material 10s. For example, when the carriage 51 is moving in the direction indicated by the arrow X2, the heads 52a and 52b are driven to discharge the model material 10m and the support material 10s in this order. In this way, the model material 10m lands first on the particle layer 31, and the support material 10s lands afterwards. This makes it possible to for a model region, which is to be formed by the first discharging unit, to be formed before a support region, which is to be formed by the second discharging unit.

FIG. 28 is a schematic top view illustrating an example of a carriage of the three-dimensional object producing apparatus.

In the example illustrated in FIG. 28, the carriage 51 has model material discharging heads 52a1 and 52a2 on both sides of a support material discharging head 52b. In the example illustrated in FIG. 28, when the carriage 51 is moving in the direction of the arrow X2, the head 52a1 is used to discharge the model material, and the head 52b is used to discharge the support material. On the other hand, when the carriage 51 is moving in the direction of the arrow X1, the head 52a2 is used to discharge the model material, and the head 52b is used to discharge the support material. This makes it possible for the model material to be discharged before the support material regardless of in which direction of the arrow X1 and the arrow X2 the carriage is moving.

When operating the carriage 51 bidirectionally as described above, after the carriage 51 is moved in the direction of the arrow X1 to discharge the model material and the support material, the flattening roller 12 supplies the resin particles to the object forming tank 22 and flattens the resin particles uniformly while the carriage 51 is kept on standby at the right-hand side of FIG. 28. Subsequently, the carriage 51 is moved in the direction of the arrow X2 to discharge the model material and the support material.

Because the model material and the support material can be discharged bidirectionally in the example illustrated in FIG. 28, there is no need for returning the carriage to the home position after discharging is finished once, making it possible to increase the object forming speed.

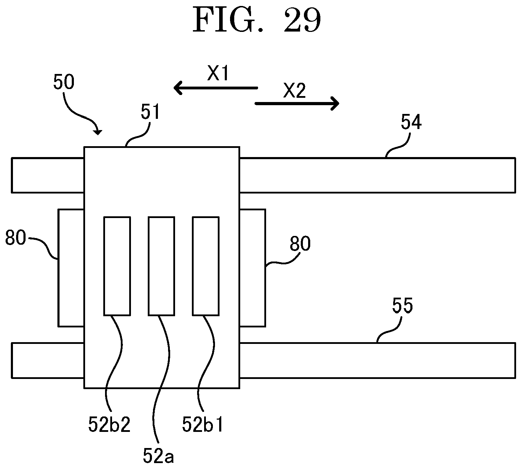

As illustrated in FIG. 29, the carriage 51 may have support material discharging heads 52b1 and 52b2 on both sides of a model material discharging head 52a unlike the example illustrated in FIG. 28.

In the example illustrated in FIG. 29, when the carriage 51 is moving in the direction of the arrow X2, the head 52a is used to discharge the model material, and the head 52b2 is used to discharge the support material. On the other hand, when the carriage 51 is moving in the direction of the arrow X1, the head 52a is used to discharge the model material, and the head 52b1 is used to discharge the support material. This makes it possible for the model material to be discharged before the support material regardless of in which direction of the arrow X1 and the arrow X2 the carriage is moving.

In the examples illustrated in FIG. 28 and FIG. 29, the model material discharging head 52a and the support material discharging head 52b are mounted on one carriage. The present disclosure is not limited to this example. In other words, in the present disclosure, the first discharging unit and the second discharging unit may be provided integrally or may be provided separately.

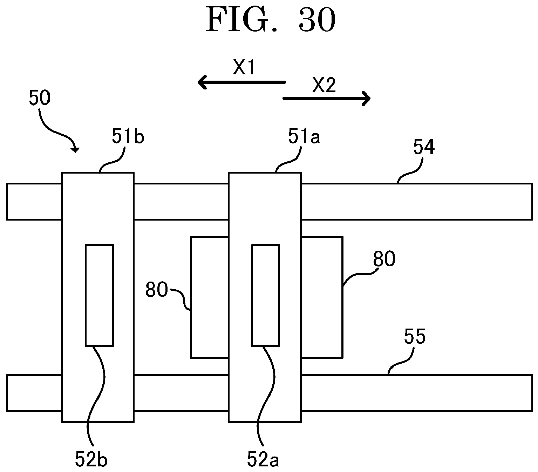

For example, as illustrated in FIG. 30, the model material discharging head 52a and the support material discharging head 52b may be mounted on different carriages 51a and 51b. This makes it possible to move the head 52a and the head 52b independently, and makes it easy to change the time that will pass until when forming a support region after a model region is formed. In other words, it is preferable to provide the first discharging unit and the second discharging unit separately and make the first discharging unit and the second discharging unit capable of moving independently.

When materials of the resin particles and kinds of the model material are changed, there may be a case where the time taken for the model material to permeate the resin particles and the time taken for melt-solidification of the model material change. In the example illustrated in FIG. 30, even when the materials are changed, it is possible to set the suitable conditions for the respective materials easily.

FIG. 17 is a diagram illustrating an example flow when removing a support part from a three-dimensional object.

First, as illustrated at the left-hand side of FIG. 17, the resin particles 20 having adhered to around the three-dimensional object obtained by laminating the model parts 30 are blown with a wind 90 generated by, for example, an air blower and removed. Next, as illustrated at the right-hand side of FIG. 17, the three-dimensional object and the support part 200 are immersed in a liquid 91 that can dissolve the solidified support material 202, to remove the support part 200 from the three-dimensional object, to produce a three-dimensional object having the finally desired shape.

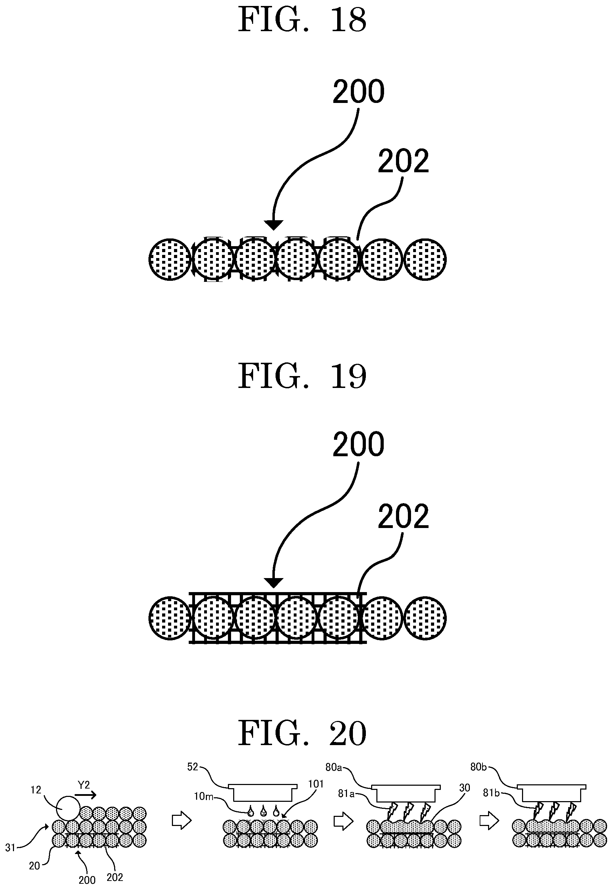

FIG. 18 is a diagram illustrating an example of a support part formed using the solvent volatilizing method.

As illustrated in FIG. 18, in the solvent volatilizing method, a support part 200 is formed through volatilization of the solvent of the support material 10s. Hence, the volume of the solidified support material 202 is smaller than the volume of the discharged support material 10s. Therefore, it is considered that the solvent volatilizing method results in a state that the resin particles 20 have been coated with the solidified support material 202 as illustrated in FIG. 18.

As described above, in the solvent volatilizing method, for example, the discharged support material 10s is heated by, for example, preheating of the resin particles 20 or the light 81 applied by the light irradiation unit 80, to have the solvent volatilized and solidify, to form the support part 200.

FIG. 19 is a diagram illustrating an example of a support part formed using the thermal curing method.

As illustrated in FIG. 19, in the thermal curing method, the reactive compound of the support material 10s is allowed to undergo a polymerization reaction to form a support part 200. Hence, the amount of volume reduction to the solidified support material 202 is smaller than when the solvent volatilizing method is employed. Therefore, it is considered that the thermal curing method results in a state that the gaps between the resin particles 20 have been filled full of the solidified support material 202 as illustrated in FIG. 19.

As described above, in the thermal curing method, for example, the discharged support material 10s is heated by, for example, preheating of the resin particles 20 or the light 81 applied by the light irradiation unit 80, to activate the curing agent and allow the reactive compound to undergo a polymerization reaction, to form the support part 200.

FIG. 20 is a diagram illustrating an example flow when fusing resin particles using a plurality of light irradiation units.

First, as illustrated at the first section of FIG. 20 counted from the left, while being rotated, the flattening roller 12 is moved in the direction of the arrow Y2 to the top of a particle layer 31 in which a support part 200 is present, to form a new particle layer 31 as in the left-hand side of FIG. 16. Next, as illustrated at the second section of FIG. 20 counted from the left, the head 52 discharges the model material (model ink) 10m to the particle layer 31, to form a model region 101 as in the center of FIG. 16.

Then, as illustrated at the third section of FIG. 20 counted from the left, the resin particles 20 in the model region 101 formed are heated by light 81a emitted by a first light irradiation unit 80a, and the model material 10m absorbs the light 81 and generates heat, to fuse the resin particles 20 with each other to become a model part (object forming layer) 30. Next, as illustrated at the fourth section of FIG. 20 counted from the left, the resin particles 20 in part of the model region 101 and the resin particles 20 in part of the support region 201 (support part 200) are heated by light 81b emitted by a second light irradiation unit 80b and fused with each other.

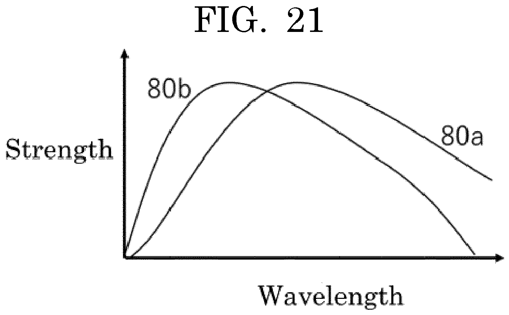

As regards the light 81a emitted by the first light irradiation unit 80a and the light 81b emitted by the second light irradiation unit 80b, the light 81b emitted by the second light irradiation unit 80b has a peak at a shorter wavelength as plotted in FIG. 21. With this configuration, even when the support region 201 is formed below the model region 101 as illustrated in FIG. 20, it is possible to more infallibly heat and fuse the resin particles located at the boundary between the model region 101 and the support region 201 (or the support part 200) by means of high transmission light having a short wavelength.

Next, an example flow of an object forming operation according to the three-dimensional object producing method of the present disclosure will be described.

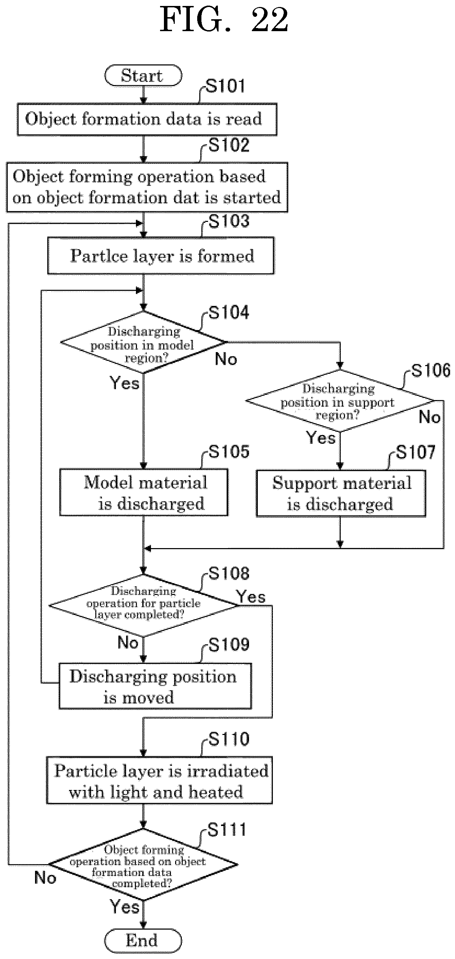

FIG. 22 is a flowchart illustrating an example flow of a process of performing an object forming operation. Here, an example flow of the process of performing an object forming operation will be described according to the steps denoted by S in the flowchart illustrated in FIG. 22.

In the step S101, the controlling section 500 reads object formation data received from the object formation data generating apparatus 600, and moves the flow to S102.

In the step S102, the controlling section 500 starts an object forming operation based on the object formation data, moves each unit such as the heads 52 to the initial position by means of the driving units, and moves the flow to S103.

In the step S 103, the controlling section 500 drives the flattening roller 12 to form a particle layer 31 containing the resin particles 20, and moves the flow to S104.

In the step S104, the controlling section 500 moves the flow to S105 when it is determined based on the object formation data that the discharging positions of the heads 52 are in the model region. The controlling section 500 moves the flow to S106 when it is determined that the discharging positions of the heads 52 are not in the model region.

In the step S105, the controlling section 500 controls the heads 52 to discharge the model material 10m, and moves the flow to S108.

In the step S106, the controlling section 500 moves the flow to S107 when it is determined based on the object formation data that the discharging positions of the heads 52 are in the support region. The controlling section 500 moves the flow to S108 when it is determined that the discharging positions of the heads 52 are not in the support region.

In the step S107, the controlling section 500 controls the heads 52 to discharge the support material 10s, and moves the flow to S108.

In the step S108, the controlling section 500 moves the flow to S110 when it is determined that the discharging operation for the particle layer 31 concerned has been completed. The controlling section 500 moves the flow to S109 when it is determined that the discharging operation for the particle layer 31 concerned has not been completed.

In the step S109, the controlling section 500 moves the discharging positions of the heads 52, and returns the flow to S104.

In the step S110, the controlling section 500 controls the light irradiation unit 80 to emit light 81 to the particle layer 31 to heat the particle layer 31. Here, the resin particles 20 in the model region in the particle layer 31 are fused with each other, and the resin particles 20 in the model region and the resin particles 20 in the support region are also fused with each other.

In the step S111, the controlling section 500 returns the flow to S103 when it is determined that the object forming operation based on the object formation data has not been completed. The controlling section 500 terminates the flow when it is determined that the object forming operation based on the object formation data has been completed.

### EXAMPLES

The present disclosure will be described below by way of Examples. The present disclosure should not be construed as being limited to these Examples.

### (Example 1)

Using a three-dimensional object producing apparatus as illustrated in FIG. 10, a support region was formed in a manner to contact a lower side (lower surface) of a model region, to form one layer of a model part over a support part, to form an object 1. When forming the model part, the temperature of the model region during heating of the model region was measured with a thermocamera (available from Optris GmbH, XI-80).

PEEK (available from Victrex Inc., 150PF) was used as the resin particles contained in a particle layer.

The following composition was used as the support material. The thermal decomposition start temperature of the support part formed through solidification of the support material was 392 degrees C.
- Acryloylmorpholine (available from Tokyo Chemical Industry Co., Ltd.): 97 parts by mass
- t-Butyl peroxy-2-ethyl hexyl monocarbonate (available from NOF Corporation): 2 parts by mass
- BYK-UV3530 (available from BYK Additives & Instruments): 1 part by mass

In Example 1, the average thickness of a particle layer was 0.1 mm. The size of the model region and the support region in the plane direction was 1 cm × 1 cm. A black ink (available from Nazdar Ink Technologies, LMOPI11AKK) was used as the model material.

In Example 1, the preheating temperature of a particle layer was 160 degrees C, and the particle layer was heated for 3.6 seconds using a halogen lamp having an output power of 383 W. The maximum temperature to which the model region reached during heating was 380 degrees C.

### <Observation>

The object 1 obtained in the way described above was observed with a digital microscope (available from Keyence Corporation). As a result, the resin particles in the model region had melted to form the model part. The model part and the support part had fused with each other, and the model part did not deform even after object formation.

In the same way, yellowing on the surface of the support part was observed. Here, if it was the case that the surface of the support part had turned yellow, the support material that had solidified can be considered to have thermally decomposed.

In Example 1, the surface of the support part had not turned yellow. The results of observation are presented in Table 1.

### (Example 2)

An object 2 was formed in the same manner as in Example 1, except that unlike in Example 1, the preheating temperature of a particle layer was 190 degrees C, the output power of the halogen lamp was 340 W, and the heating time was 5.0 seconds. The maximum temperature to which the model region reached during heating was 385 degrees C.

The object 2 was observed in the same manner as in Example 1. As a result, the resin particles in the model region had melted to form the model part. The model part and the support part had fused with each other, and the model part did not deform even after object formation. The surface of the support part had not turned yellow. The results are presented in Table 1.

### (Example 3)

An object 3 was formed in the same manner as in Example 1, except that unlike in Example 1, PA12 (available from EOS, PA2200) was used as the resin particles, the preheating temperature of a particle layer was 120 degrees C, the output power of the halogen lamp was 745 W, and the heating time was 0.7 seconds. The maximum temperature to which the model region reached during heating was 322 degrees C.

The object 3 was observed in the same manner as in Example 1. As a result, the resin particles in the model region had melted to form the model part. The model part and the support part had fused with each other, and the model part did not deform even after object formation. The surface of the support part had not turned yellow. The results are presented in Table 1.

### (Example 4)

An object 4 was formed in the same manner as in Example 3, except that unlike in Example 3, the output power of the halogen lamp was 373 W. The maximum temperature to which the model region reached during heating was 245 degrees C.

The object 4 was observed in the same manner as in Example 1. As a result, the resin particles in the model region had melted to form the model part. The model part and the support part had fused with each other, and the model part did not deform even after object formation. The surface of the support part had not turned yellow. The results are presented in Table 1.

### (Comparative Example 1)

An operation for forming an object was performed in the same manner as in Example 1, except that unlike in Example 1, the output power of the halogen lamp was 213 W and the heating time was 8.0 seconds. The maximum temperature to which the model region reached during heating was 280 degrees C.

In Comparative Example 1, the temperature to which the model region reached during heating was lower than the extrapolated melting end temperature of the resin particles. Therefore, the resin particles in the model region did not melt (fuse), failing to form a model part. Hence, observations other than presence or absence of yellowing on the surface of the support part were not performed. The results are presented in Table. 1.

### (Comparative Example 2)

An operation for forming an object was performed in the same manner as in Example 2, except that unlike in Example 2, the output power of the halogen lamp was 425 W and the heating temperature was 2.0 seconds. The maximum temperature to which the model region reached during heating was 380 degrees C.

In Comparative Example 2, although the temperature to which the model region reached during heating was higher than the extrapolated melting end temperature of the resin particles, the heating time was not sufficient, and the resin particles did not melt sufficiently and were unable to fuse with each other, failing to form a model part. Hence, observations other than presence or absence of yellowing on the surface of the support part were not performed. The results are presented in Table. 1.

### (Comparative Example 3)

An operation for forming an object was performed in the same manner as in Example 3, except that unlike in Example 3, the output power of the halogen lamp was 298 W. The maximum temperature to which the model region reached during heating was 196 degrees C.

In Comparative Example 3, although the temperature to which the model region reached during heating was higher than the extrapolated melting end temperature of the resin particles, the heating time was not sufficient, and the resin particles did not melt sufficiently and were unable to fuse with each other, failing to form a model part. Hence, observations other than presence or absence of yellowing on the surface of the support part were not performed. The results are presented in Table. 1.

### (Comparative Example 4)

An operation for forming an object was performed in the same manner as in Example 3, except that unlike in Example 3, the output power of the halogen lamp was 260 W.

In Comparative Example 4, the temperature to which the model region reached during heating was lower than the extrapolated melting end temperature of the resin particles. Therefore, the resin particles in the model region did not melt (fuse), failing to form a model part. Hence, observations other than presence or absence of yellowing on the surface of the support part were not performed. The results are presented in Table. 1.

**Table 1**

| | Resin particles | | Heating conditions | | | Results | | | | |
|---|---|---|---|---|---|---|---|---|---|---|
| | Kind | Extrapolated melting end temp. (degree C) | Particle layer preheating temp. (degree C) | Halogen lamp output power (W) | Heating time (sec) | Temp. reached by model region (degree C) | Model part melting | Fusing of model and support parts | Model part deform -ation | Support part yellowing |
| Ex. 1 | PE EK | 350 | 160 | 383 | 3.6 | 380 | Melted | Fused | Absent | Absent |
| Ex. 2 | PE EK | 350 | 190 | 340 | 5 | 385 | Melted | Fused | Absent | Absent |
| Ex. 3 | PA 12 | 192 | 120 | 745 | 0.7 | 322 | Melted | Fused | Absent | Absent |
| Ex. 4 | PA 12 | 192 | 120 | 373 | 0.7 | 245 | Melted | Fused | Absent | Absent |
| Comp. Ex. 1 | PE EK | 350 | 160 | 213 | 8 | 280 | Not melted | - | - | Absent |
| Comp. Ex. 2 | PE EK | 350 | 190 | 425 | 2 | 380 | Not melted | - | - | Absent |
| Comp. Ex. 3 | PA 12 | 192 | 120 | 298 | 0.7 | 196 | Not melted | - | - | Absent |
| Comp. Ex. 4 | PA 12 | 192 | 120 | 260 | 0.7 | 170 | Not melted | - | - | Absent |

As presented in Table 1, in Examples 1 to 4, which are Examples of the present disclosure, it can be seen that the resin particles in the model region fused with each other, and the resin particles in the model region (model part) and the resin particles in the support region (support part) contacting the model region fused with each other, and the model part deformation was suppressed.

As described above, the three-dimensional object producing apparatus of the present disclosure includes a layer forming unit configured to form a particle layer containing resin particles, a first discharging unit configured to discharge a model material capable of absorbing energy to the particle layer to form a model region, a second discharging unit configured to discharge a support material to the particle layer to form a support region, and an energy applying unit configured to apply energy to the model region. Through application of the energy to the model region, the resin particles in the model region are fused with each other and the resin particles in the model region are fused with the resin particles in the support region contacting the model region.

Accordingly, the three-dimensional object producing apparatus of the present disclosure can suppress deformation of a three-dimensional object formed by heating the resin particles and improve the object formation accuracy of the three-dimensional object.

### (Synthesis example 1)

### <Synthesis of compound 1>

BPA (available from Aldrich, reagent grade) (345 g), DFBP (available from Aldrich, reagent grade) (330 g), potassium carbonate (available from Tokyo Chemical Industry Co., Ltd., reagent grade) (230 g), and dimethyl sulfoxide (DMSO) (3,000 mL) were added together, heated at 170 degrees C for 2 hours, and further heated at 300 degrees C for 3 hours. Subsequently, DCBP (available from Aldrich, reagent grade) (3 g) was added to the resultant, and the resultant was slowly cooled.

The obtained solution was added in cold methanol under stirring, to precipitate a polymer. Subsequently, the polymer was washed with water about three times and dissolved in dichloromethane (1,000 mL). The obtained solution was again added in cold methanol for reprecipitation. The precipitated polymer was dried in the atmosphere, and subsequently dried sufficiently overnight with a vacuum dryer, to obtain a compound 1, which was a polymer (600 g).

### (Synthesis example 2)

### <Synthesis of compound 2>

BPA (available from Aldrich, reagent grade) (345 g), DCBP (available from Aldrich, reagent grade) (320 g), and potassium carbonate (available from Tokyo Chemical Industry Co., Ltd., reagent grade) (230 g) were added in a 5 L four-necked flask, and dimethyl sulfoxide (DMSO) (3,000 mL) was added. The resultant was heated at 170 degrees C for 2 hours (to evaporate the solvent), and further heated (refluxed) at 300 degrees C for 3 hours. Subsequently, DCBP (available from Aldrich, reagent grade) (3 g) was added to the resultant, and the resultant was slowly cooled.

The obtained solution was added in cold methanol under stirring, to precipitate a polymer. Subsequently, the polymer was washed with water about three times and dissolved in dichloromethane (1,000 mL). The obtained solution was again added in cold methanol for reprecipitation. The precipitated polymer was dried in the atmosphere, and subsequently dried sufficiently overnight with a vacuum dryer, to obtain a compound 2, which was a polymer (600 g).

### (Synthesis example 3)

### <Synthesis of compound 3>

PEEK (available from Victrex, 150XF) (115 g) and dichloromethane (1,000 mL) were added in a 2 L four-necked flask. Subsequently, tetrafluoroacetic acid (TFA, available from Aldrich, reagent grade) (400 mL) was added. Subsequently, propanedithiol (80 mL) was added, and the resultant was stirred at room temperature for 3 days. Subsequently, the obtained solution was added in cold methanol under stirring, to precipitate a polymer. Subsequently, the polymer was washed with water about three times and dissolved in dichloromethane (1,000 mL). The obtained solution was again added in cold methanol for reprecipitation. The precipitated polymer was dried in the atmosphere, and subsequently dried sufficiently overnight with a vacuum dryer, to obtain a compound 3, which was a polymer (100 g).

### (Synthesis example 4)

### <Synthesis of compound 4>

### -Synthesis of compound F-

To fluorobenzene (available from Wako Pure Chemical Industries, Ltd., reagent grade) (231 g), aluminum chloride (III) (available from Kishida Chemical Co., Ltd., reagent grade) (1.6 g) and 1,2-cyclohexane dicarbonyl dichloride (available from Taizhou Taifeng Chemical Co., Ltd.) (253 g) were added. In dichloromethane (1,000 mL), the resultant was stirred at room temperature for 24 hours, and separated with a column, to obtain a compound F represented by a structural formula below (300 g) (at a yield of 65%).

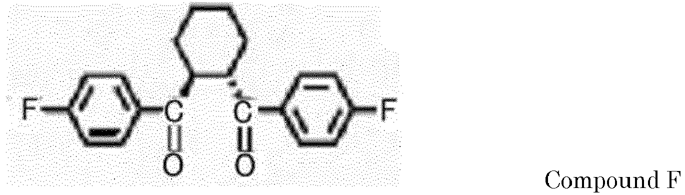

### -Synthesis of compound 4-

BPA (available from Aldrich, reagent grade) (345 g), the compound F (300 g), and potassium carbonate (available from Tokyo Chemical Industry Co., Ltd., reagent grade) (230 g) were added in a 5 L four-necked flask, and DMSO (3,000 mL) was added. The resultant was heated at 170 degrees C for 2 hours (to evaporate the solvent), and subsequently further heated (refluxed) at 300 degrees C for 3 hours. Subsequently, DCBP (available from Aldrich, reagent grade) (3 g) was added to the resultant, and the resultant was slowly cooled. The obtained sample solution was added in cold methanol under stirring, to precipitate a polymer. Subsequently, the polymer was washed with water about three times and dissolved in dichloromethane (1,000 mL). The obtained solution was again added in cold methanol for reprecipitation. The precipitated polymer was dried in the atmosphere, and subsequently dried sufficiently overnight with a vacuum dryer, to obtain a compound 4, which was a polymer (600 g).

### (Resin particle production example 1)

### -Production of resin particles 1-

Filaments having a diameter of 40 micrometers were produced using a polyether ether ketone (PEEK) resin (available from Victrex, 151G), subsequently stretched, and cut at a width of 45 micrometers with a remodeled cutting device, to produce resin particles 1. The 50% cumulative volume-based particle diameter of the obtained resin particles 1 measured in the manner described below was 60 micrometers.

### <50% cumulative volume-based particle diameter>

Using a particle size distribution analyzer (instrument name: MICROTRAC MT3300EXII, available from Microtrac Bel Corporation), the 50% cumulative volume-based particle diameter was measured based on a particle refractive index of each resin particle, and without using a solvent according to a dry (atmospheric) method.

The refractive index of polyether ether ketone (PEEK) was set to 1.31. The refractive index of a polycarbonate (PC) resin was set to 1.30.

### (Resin particle production example 2)

### -Production of resin particles 2-

Resin particles 2 were produced in the same manner as in Resin particle production example 1, except that unlike in Resin particle production example 1, the cutting width of the filaments was adjusted to 15 micrometers.

The 50% cumulative volume-based particle diameter of the obtained resin particles 2 measured in the same manner as in Resin particle production example 1 was 20 micrometers.

### (Resin particle production example 3)

### -Production of resin particles 3-

Resin particles 3 were produced in the same manner as in Resin particle production example 1, except that unlike in Resin particle production example 1, the filament diameter was adjusted to 75 micrometers and the cutting width was adjusted to 75 micrometers.

The 50% cumulative volume-based particle diameter of the obtained resin particles 3 measured in the same manner as in Resin particle production example 1 was 110 micrometers.

### (Resin particle production example 4)

### -Production of resin particles 4-

Using a polycarbonate (PC) resin (available from Mitsubishi Engineering-Plastics Corporation, IUPILON H4000), resin particles 4 were produced through production and cutting of filaments in the same manner as in Resin particle production example 1.

The 50% cumulative volume-based particle diameter of the obtained resin particles 4 measured in the same manner as in Resin particle production example 1 was 60 micrometers.

### (Example 5)

A polyallylate-based resin (PAR) (available from Unitika Ltd., M2040) (10 parts by mass) and limonene (available from Yasuhara Chemical Co., Ltd.) (90 parts by mass) were mixed, to prepare a support material.

After heated to 60 degrees C by an inkjet head available from Ricoh Company, Ltd., the support material was discharged to a resin particle layer formed of PEEK resin particles having a 50% cumulative volume-based particle diameter of 60 micrometers in a manner that the content of the support material would be 50% by mass, discharged in a manner to overflow by an amount corresponding to 10% of the lower portion of a model region, and subsequently heated from above with an IR heater to evaporate the solvent, to form a support structure.

For a model formation region, a model ink containing carbon black was discharged using the same inkjet head and heated with the IR heater to higher than or equal to the melting point of the resin, to cure the object. Not only the lower portion, but also the sides and upper portion of the object were coated with the support ink, to suppress warpage (HSS-type object formation).

### (Examples 6 to 9)

A support material was prepared as in Example 5, except that the polyallylate-based resin (available from Unitika Ltd., M2040) (10 parts by mass) was changed to the compound 1 (10 parts by mass) synthesized in Synthesis example 1, and limonene was changed to spearmint oil (available from Yamamoto Perfumery Co., Ltd.).

After heated to 60 degrees C by an inkjet head available from Ricoh Company, Ltd., the support material was discharged to a resin particle layer formed of PEEK resin particles having the 50% cumulative volume-based particle diameter presented in Table 2 in a manner that the content of the support material would be the content presented in Table 2, to form an object in the same manner as in Example 5.

### (Example 10)

After a support structure was formed by discharging a support material in the same manner as in Example 5 to a resin particle layer formed of PEEK resin particles having a 50% cumulative volume-based particle diameter of 60 micrometers, a model region was formed not by the HSS method of Example 5 but by recoating resin particles from a supplying tank and subsequently using a CO₂ laser at a laser intensity that would enable sufficient melting within a range of from 1 W through 30 W (SLS+IJ method).

### (Example 11)

A bending strength test piece was produced in the same manner as in Example 5, except that unlike in Example 5, the polyallylate-based resin (available from Unitika Ltd., M2040) was changed to the compound 2 synthesized in Synthesis example 2 and limonene was changed to spearmint oil (available from Yamamoto Perfumery Co., Ltd.) to prepare a support material.

### (Example 12)

A bending strength test piece was produced in the same manner as in Example 5, except that unlike in Example 5, the polyallylate-based resin (available from Unitika Ltd., M2040) was changed to the compound 3 synthesized in Synthesis example 3 and limonene was changed to fention (available from Wako Pure Chemical Industries, Ltd.) to prepare a support material.

### (Example 13)

A bending strength test piece was produced in the same manner as in Example 5, except that unlike in Example 5, the polyallylate-based resin (available from Unitika Ltd., M2040) was changed to the compound 4 synthesized in Synthesis example 4 and limonene was changed to ethanol (available from Wako Pure Chemical Industries, Ltd.) to prepare a support material.

### <Bending strength test of support region>

A slurry sample was prepared at a ratio between a support material and resin particles presented in Table 2. Subsequently, the slurry sample was poured into a molding die having a shape according to ISO178. Subsequently, the resultant was heated to higher than or equal to the boiling point of the solvent to volatilize the solvent, and subsequently, a bending strength test was performed according to ISO178. The result is presented in Table 3.

### <Surface property>

As the surface property of each three-dimensional object obtained, an arithmetic mean height Sa (micrometer) within a range of a 0.5 cm square of a side surface of each object in the layer lamination direction was measured with a surface roughness measuring instrument (KS-1100, available from Keyence Corporation). The results are presented in Table 3.

### <Warpage>

As warpage, the centers of the three-dimensional objects serving as the bending strength test pieces were pushed against a horizontal table, to measure the higher one of the floating heights on both ends as warpage. The results are presented in Table 3.

### <Evaluation of removability>

After each three-dimensional object covered with a support region was obtained, the three-dimensional object was left to stand still in tetrahydrofuran (THF) or ethanol at 30 times by mass the mass of the support region. Twelve hours later, the three-dimensional object was shaken for 3 minutes with an ultrasonic cleaner (available from As One Corporation, AXEL) and taken out to evaluate removability according to the criteria described below. For any three-dimensional object that was evaluated as A or B, the time taken to dissolve was measured and recorded. The results are presented in Table 3.

### [Evaluation criteria]

A: No support region remained.
B: The support region adhered to the surface like a glue, but could be removed with a hand.
C: The support region remained.

**Table 2**

| | Support material | | | | | Resin particles | | | Content of support material relative to resin particle layer (% by mass) |
|---|---|---|---|---|---|---|---|---|---|
| | Resin | Mass of resin (% by mass) | Solvent | Solvent boiling point (degree C) | Mass of solvent (% by mass) | No. | Resin kind | 50% cumulative volume-based particle diameter (micrometer) | |
| Ex. 5 | PAR | 10 | Limonene | 176 | 90 | 1 | PEEK | 60 | 50 |
| Ex. 6 | Compound 1 | 10 | Spearmint oil | 228 | 90 | 1 | PEEK | 60 | 50 |
| Ex. 7 | Compound 1 | 10 | Spearmint oil | 228 | 90 | 2 | PEEK | 20 | 50 |
| Ex. 8 | Compound 1 | 10 | Spearmint oil | 228 | 90 | 3 | PEEK | 110 | 50 |
| Ex. 9 | Compound 1 | 10 | Spearmint oil | 228 | 90 | 1 | PEEK | 60 | 70 |
| Ex. 10 | Compound 1 | 10 | Spearmint oil | 228 | 90 | 1 | PEEK | 60 | 50 |
| Ex. 11 | Compound 2 | 10 | Fention | 192 | 90 | 1 | PEEK | 60 | 50 |
| Ex. 12 | Compound 3 | 10 | Spearmint oil | 228 | 90 | 4 | PC | 60 | 50 |
| Ex. 13 | Compound 4 | 10 | Ethanol | 78 | 90 | 4 | PC | 60 | 50 |

**Table 3**

| | Bending strength (MPa) of support region | Object forming method | Evaluation of object | | | |
|---|---|---|---|---|---|---|
| | | | Surface property (micrometer) | Warpage (%) | Removability | |
| | | | | | Measured value | Evaluation |
| Ex. 5 | 12 | HSS | 8 | 0.2 | 5 minutes | A |
| Ex. 6 | 50 | HSS | 1 | 0.1 | 5 minutes | A |
| Ex. 7 | 55 | HSS | 3 | 0.2 | 5 minutes | A |
| Ex. 8 | 35 | HSS | 9 | 0.3 | 5 minutes | A |
| Ex. 9 | 50 | HSS | 7 | 0.3 | 5 minutes | A |
| Ex. 10 | 50 | SLS+IJ | 2 | 0.2 | 5 minutes | A |
| Ex. 11 | 60 | HSS | 1 | 0.1 | 5 minutes | A |
| Ex. 12 | 40 | HSS | 2 | 0.3 | 5 minutes | A |
| Ex. 13 | 40 | HSS | 1 | 0.5 | 9 minutes | A |

Aspects of the present disclosure are, for example, as follows.
<1> A three-dimensional object producing apparatus including:
   a layer forming unit configured to form a particle layer containing resin particles;
   a first discharging unit configured to discharge a model material capable of absorbing energy to the particle layer to form a model region;
   a second discharging unit configured to discharge a support material to the particle layer to form a support region; and
   an energy applying unit configured to apply the energy to the model region,
   wherein through application of the energy to the model region, the resin particles in the model region are fused with each other and the resin particles in the model region are fused with the resin particles in the support region contacting the model region.
<2> The three-dimensional object producing apparatus according to <1>,
   wherein through solidification of the support material discharged by the second discharging unit, the resin particles in the support region are bonded with each other.
<3> The three-dimensional object producing apparatus according to <1> or <2>,
   wherein when the layer forming unit forms a second particle layer over a first particle layer, the second discharging unit forms the support region in the first particle layer in a manner that the support region in the first particle layer contacts a planned region to be the model region in the second particle layer.
<4> The three-dimensional object producing apparatus according to <1> or <2>,
   wherein when the layer forming unit forms a second particle layer over a first particle layer, the second discharging unit forms the support region in a region in the second particle layer contacting the model region in the first particle layer.
<5> The three-dimensional object producing apparatus according to any one of <1> to <4>,
   wherein the model region formed by the first discharging unit and the support region formed by the second discharging unit are formed in one particle layer.
<6> The three-dimensional object producing apparatus according to <5>,
   wherein when forming the model region and the support region in a manner to adjoin each other in the one particle layer, the first discharging unit forms the model region before the second discharging unit forms the support region.
<7> The three-dimensional object producing apparatus according to any one of <1> to <6>,
   wherein the second discharging unit forms the support region in a manner that the support region contacts at least part of a region in the model region constituting a region near a contour of the model region.
<8> The three-dimensional object producing apparatus according to any one of <1> to <7>,
   wherein the first discharging unit and the second discharging unit are provided integrally.
<9> The three-dimensional object producing apparatus according to any one of <1> to <7>,
   wherein the first discharging unit and the second discharging unit are provided separately and capable of moving independently.
<10> The three-dimensional object producing apparatus according to any one of <1> to <9>,
   wherein the energy applying unit collectively performs fusing of the resin particles in the model region with each other and fusing of the resin particles in the model region with the resin particles in the support region contacting the model region.
<11> The three-dimensional object producing apparatus according to any one of <1> to <10>,
   wherein the energy applying unit is a light irradiation unit configured to emit light, and
   wherein the model material discharged by the first discharging unit is capable of generating heat by absorbing the light emitted by the light irradiation unit.
<12> The three-dimensional object producing apparatus according to <11>,
   wherein the light irradiation unit emits rays of the light varied in the energy, to perform fusing of the resin particles in the model region with each other and fusing of the resin particles in the model region with the resin particles in the support region contacting the model region.
<13> The three-dimensional object producing apparatus according to <12>,
   wherein the light irradiation unit emits the light having a wavelength shorter than a wavelength of the light emitted for fusing the resin particles in the model region with each other, to perform fusing of the resin particles in the model region with the resin particles in the support region contacting the model region.
<14> The three-dimensional object producing apparatus according to any one of <1> to <13>,
   wherein the support material discharged by the second discharging unit is solidified through volatilization of part of the support material.
<15> The three-dimensional object producing apparatus according to <14>,
   wherein the support material discharged by the second discharging unit is capable of absorbing the energy.
<16> The three-dimensional object producing apparatus according to any one of <1> to <13>,
   wherein the support material discharged by the second discharging unit is solidified through undergoing a polymerization reaction.
<17> The three-dimensional object producing apparatus according to <15> or <16>,
   wherein the support material solidified is soluble in a liquid that does not dissolve the resin particles.
<18> The three-dimensional object producing apparatus according to any one of <1> to <17>,
   wherein the support region has a bending strength of 1.0 MPa or greater and can be dissolved and removed within 12 hours from when the support region is entirely immersed in tetrahydrofuran or ethanol at 30 times by mass the support region at 25 degrees C.
<19> A three-dimensional object producing method including:
   forming a particle layer containing resin particles;
   discharging a model material capable of absorbing energy to the particle layer to form a model region;
   discharging a support material to the particle layer to form a support region; and
   applying the energy to the model region to fuse the resin particles in the model region with each other and fuse the resin particles in the model region with the resin particles in the support region contacting the model region.
<20> The three-dimensional object producing method according to <19>,
   wherein a support part formed through solidification of the support material is removed by immersion in a liquid that does not dissolve a model part formed through fusing of the resin particles in the model region with each other.
<21> The three-dimensional object producing method according to <19> or <20>, further including
   preheating the resin particles such that a temperature of the resin particles becomes a preheating temperature desired.
<22> The three-dimensional object producing method according to <21>,
   wherein the support material contains an adhesive component for bonding the resin particles with each other, and a solvent, and
   wherein at least any one of a melting point and a softening point of the adhesive component is higher than the preheating temperature, and a boiling point of the solvent is lower than the preheating temperature.
<23> The three-dimensional object producing method according to any one of <19> to <22>,
   wherein a thermal decomposition start temperature of a support part formed through solidification of the support material is higher than an extrapolated melting end temperature of the resin particles.
<24> The three-dimensional object producing method according to <23>,
   wherein the thermal decomposition start temperature of the support part is higher than 380 degrees C.
<25> The three-dimensional object producing method according to <23> or <24>,
   wherein in the applying the energy, a temperature of the model region is higher than the extrapolated melting end temperature of the resin particles and lower than the thermal decomposition start temperature of the support part.
<26> A material set for producing a three-dimensional object, the material set being used in the three-dimensional object producing apparatus according to any one of <1> to <18> or in the three-dimensional object producing method according to any one of <19> to <25>, the material set including:
   the support material; and
   the resin particles,
   wherein a thermal decomposition start temperature of a support part formed through solidification of the support material is higher than an extrapolated melting end temperature of the resin particles.

The three-dimensional object producing apparatus according to any one of <1> to <18>, the three-dimensional object producing method according to any one of <19> to <25>, and the material set for producing a three-dimensional object according to <26> can solve the various problems in the related art and achieve the object of the present disclosure.

## Claims

1. A three-dimensional object producing apparatus comprising:
a layer forming unit configured to form a particle layer that comprises resin particles;
a first discharging unit configured to discharge a model material capable of absorbing energy to the particle layer to form a model region;
a second discharging unit configured to discharge a support material to the particle layer to form a support region; and
an energy applying unit configured to apply the energy to the model region,
wherein through application of the energy to the model region, the resin particles in the model region are fused with each other and the resin particles in the model region are fused with the resin particles in the support region contacting the model region.

2. The three-dimensional object producing apparatus according to claim 1,
wherein through solidification of the support material discharged by the second discharging unit, the resin particles in the support region are bonded with each other.

3. The three-dimensional object producing apparatus according to claim 1 or 2,
wherein the model region formed by the first discharging unit and the support region formed by the second discharging unit are formed in one particle layer,
wherein when forming the model region and the support region in a manner to adjoin each other in the one particle layer, the first discharging unit forms the model region before the second discharging unit forms the support region.

4. The three-dimensional object producing apparatus according to any one of claims 1 to 3,
wherein the second discharging unit forms the support region in a manner that the support region contacts at least part of a region in the model region constituting a region near a contour of the model region.

5. The three-dimensional object producing apparatus according to any one of claims 1 to 4,
wherein the first discharging unit and the second discharging unit are provided integrally.

6. The three-dimensional object producing apparatus according to any one of claims 1 to 5,
wherein the first discharging unit and the second discharging unit are provided separately and capable of moving independently.

7. The three-dimensional object producing apparatus according to any one of claims 1 to 6,
wherein the energy applying unit collectively performs fusing of the resin particles in the model region with each other and fusing of the resin particles in the model region with the resin particles in the support region contacting the model region.

8. The three-dimensional object producing apparatus according to any one of claims 1 to 7,
wherein the energy applying unit is a light irradiation unit configured to emit light, and
wherein the model material discharged by the first discharging unit is capable of generating heat by absorbing the light emitted by the light irradiation unit.

9. The three-dimensional object producing apparatus according to any one of claims 1 to 8,
wherein the support material discharged by the second discharging unit is solidified through volatilization of part of the support material.

10. The three-dimensional object producing apparatus according to any one of claims 1 to 9,
wherein the support material discharged by the second discharging unit is solidified through undergoing a polymerization reaction.

11. The three-dimensional object producing apparatus according to claim 10,
wherein the support material solidified is soluble in a liquid that does not dissolve the resin particles.

12. The three-dimensional object producing apparatus according to any one of claims 1 to 11,
wherein the support region has a bending strength of 1.0 MPa or greater and can be dissolved and removed within 12 hours from when the support region is entirely immersed in tetrahydrofuran or ethanol at 30 times by mass the support region at 25 degrees C.

13. A three-dimensional object producing method comprising:
forming a particle layer that comprises resin particles;
discharging a model material capable of absorbing energy to the particle layer to form a model region;
discharging a support material to the particle layer to form a support region; and
applying the energy to the model region to fuse the resin particles in the model region with each other and fuse the resin particles in the model region with the resin particles in the support region contacting the model region.

14. The three-dimensional object producing method according to claim 13,
wherein a support part formed through solidification of the support material is removed by immersion in a liquid that does not dissolve a model part formed through fusing of the resin particles in the model region with each other.

15. A material set for producing a three-dimensional object, the material set being used in the three-dimensional object producing apparatus according to any one of claims 1 to 12, or the three-dimensional object producing method according to claim 13 to 14, the material set comprising:
the support material; and
the resin particles,
wherein a thermal decomposition start temperature of a support part formed through solidification of the support material is higher than an extrapolated melting end temperature of the resin particles.
